# EUROPEAN PATENT APPLICATION

(11) **EP 4 819 133 A1**
(43) Date of publication of application: **07.10.2026**
(21) Application number: 26170755.8
(22) Date of filing: 03.04.2026
(51) Int. Cl.: G10L 21/0208, G06F 1/16, G06F 3/16, G10L 21/0364

(54) **MULTI-DEVICE INPUT BASED SHARED PROCESSING TECHNIQUES**

(30) Priority: 04.04.2025 US 202563783447 P; 01.04.2026 US 202619636467
(71) Applicant: Meta Platforms Technologies, LLC, Menlo Park, CA 94025 (US)
(72) Inventor: Sarwar, Syed Shakib, Menlo Park (US); Ithapu, Vamsi Krishna, Menlo Park (US); Tourbabin, Vladimir, Menlo Park (US); Lunner, Nils Thomas Fritiof, Menlo Park (US); Salemi, Ennio, Menlo Park (US); Jiang, Hao, Menlo Park (US)
(74) Representative: Murgitroyd & Company

(57) **Abstract**

A computer-implemented method comprises detecting, by an audio sensor communicatively coupled to the computer of a first device, a first instance of an audio signal from an environment external to the first device, the first device being communicatively coupled to a second device that receives a second instance of the audio signal, receiving, by the first device, a second instance of the audio signal from the second device that is communicatively coupled to the first device, generating by the first device, using the first instance of the audio signal and the second instance of the audio signal, a modified audio signal, and transmitting the modified audio signal to the second device for output.

## Description

### FIELD

The present disclosure relates generally to computer-implemented methods and systems of shared audio signal processing across multiple devices.

### BACKGROUND

Users wearing audio-enabled wearable devices in a common acoustic environment, such as a meeting, classroom session, guided tour, restaurant, or other multi-user scenario in which multiple users hear similar audio signals, may each capture overlapping portions of these signals and ambient sound, but these audio signals may differ from one another with respect to arrival timing, relative amplitude, background-noise content, and other characteristics. As a result, one user may receive a clearer representation of target speech while another user receives a degraded representation distorted by ambient noise or other interfering sounds. Further, independent processing at each device may further increase duplicative compute operations across a particular group of devices, resulting in increased computational burdens on these devices.

### SUMMARY

According to a first aspect, there is provided a computer-implemented method comprising: detecting, by an audio sensor communicatively coupled to the computer of a first device, a first instance of an audio signal from an environment external to the first device, the first device being communicatively coupled to a second device that receives a second instance of the audio signal; receiving, by the first device, a second instance of the audio signal from the second device that is communicatively coupled to the first device; generating by the first device, using the first instance of the audio signal and the second instance of the audio signal, a modified audio signal; and transmitting the modified audio signal to the second device for output.

In some embodiments, each of the first device and the second device is a wearable device.

In some embodiments, the generating of the modified audio signal comprises comparing a first arrival time of the first instance of the audio signal and a second arrival time of the second instance of the audio signal.

In some embodiments, the generating of the modified audio signal further comprises comparing first signal level characteristics of the first instance of the audio signal to second signal level characteristics of the second instance of the audio signal.

In some embodiments, the generating of the modified audio signal further comprises temporally aligning the first instance of the audio signal with the second instance of the audio signal.

In some embodiments, the generating of the modified audio signal further comprises combining the first instance of the audio signal and the second instance of the audio signal using at least one of beamforming, spectral filtering, adaptive noise cancellation, dereverberation, voice-activity detection, or source-separation processing.

In some embodiments, the computer-implemented method further comprises implementing a translation operation on the modified audio signal.

In some embodiments, the modified audio signal comprises an enhanced version of the audio signal.

According to a further aspect, there is provided a system comprising: a first device communicatively coupled to at least a second device, wherein the first device includes: an audio sensor that detects a first instance of an audio signal from an environment external to the first device; at least one physical processor; and physical memory comprising computer-executable instructions that, when executed by the physical processor, cause the physical processor to: receive a second instance of the audio signal from the second device; generate, using the first instance of the audio signal and the second instance of the audio signal, a modified audio signal; and transmit the modified audio signal to the second device for output.

In some embodiments, each of the first device and the second device is a wearable device.

In some embodiments, the physical processor generating the modified audio signal upon execution of the computer-executable instructions comprises comparing a first arrival time of the first instance of the audio signal and a second arrival time of the second instance of the audio signal.

In some embodiments, the physical processor generating the modified audio signal upon execution of the computer-executable instructions comprises comparing first signal level characteristics of the first instance of the audio signal to second signal level characteristics of the second instance of the audio signal.

In some embodiments, the physical processor generating the modified audio signal upon execution of the computer-executable instructions comprises temporally aligning the first instance of the audio signal with the second instance of the audio signal.

In some embodiments, the physical processor generating the modified audio signal upon execution of the computer-executable instructions comprises combining the first instance of the audio signal and the second instance of the audio signal using at least one of beamforming, spectral filtering, adaptive noise cancellation, dereverberation, voice-activity detection, or source-separation processing.

In some embodiments, computer-executable instructions, when executed by the physical processor, further cause the physical processor to implement a translation operation on the modified audio signal.

In some embodiments, the modified audio signal comprises an enhanced version of the audio signal.

According to a further aspect, there is provided a (transitory or non-transitory) computer-readable medium comprising one or more computer-executable instructions that, when executed by at least one processor of a first device, cause the at least one processor to: receive, using an audio sensor that is communicatively coupled to the at least one processor, a first instance of an audio signal from an environment external to the first device; receive a second instance of the audio signal from the second device; generate, using the first instance of the audio signal and the second instance of the audio signal, a modified audio signal; and transmit the modified audio signal to the second device for output.

In some embodiments, each of the first device and the second device is a wearable device.

In some embodiments, the at least one processor generating the modified audio signal upon execution of the one or more computer-executable instructions comprises comparing a first arrival time of the first instance of the audio signal and a second arrival time of the second instance of the audio signal.

In some embodiments, the at least one processor generating the modified audio signal upon execution of the one or more computer-executable instructions comprises comparing first signal level characteristics of the first instance of the audio signal to second signal level characteristics of the second instance of the audio signal.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a flow diagram of a computer-implemented method for implementing multi-device input based shared processing techniques as described in the present disclosure.
FIG. 2 is an illustration of an example artificial-reality system according to some embodiments of this disclosure.
FIG. 3 is an illustration of an example artificial-reality system with a handheld device according to some embodiments of this disclosure.
FIG. 4A is an illustration of example user interactions within an artificial-reality system according to some embodiments of this disclosure.
FIG. 4B is an illustration of example user interactions within an artificial-reality system according to some embodiments of this disclosure.
FIG. 5A is an illustration of example user interactions within an artificial-reality system according to some embodiments of this disclosure.
FIG. 5B is an illustration of example user interactions within an artificial-reality system according to some embodiments of this disclosure.
FIG. 6 is an illustration of an example wrist-wearable device of an artificial-reality system according to some embodiments of this disclosure.
FIG. 7 is an illustration of an example wearable artificial-reality system according to some embodiments of this disclosure.
FIG. 8 is an illustration of an example augmented-reality system according to some embodiments of this disclosure.
FIG. 9A is an illustration of an example virtual-reality system according to some embodiments of this disclosure.
FIG. 9B is an illustration of another perspective of the virtual-reality systems shown in FIG. 9A.
FIG. 10 is a block diagram showing system components of example artificial- and virtual-reality systems.
FIG. 11 illustrates an example operating environment in which at least some of the shared processing techniques of the present disclosure are implemented.
FIG. 12A illustrates a shared processing system implementing various shared processing techniques as part of another operating environment.
FIG. 12B illustrates the shared processing system of the present disclosure generating an enhanced audio signal from two instances of an audio signal detected by two different wearable devices.
FIG. 13A illustrates another operating environment in which the shared processing techniques described in the present disclosure are implemented.
FIG. 13B illustrates the shared processing system implementing the shared processing techniques described herein on an individual that is moving from one location to another.
FIG. 13C illustrates the shared processing system performing a translation operation on multiple audio signals, according to aspects described and illustrated herein.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION

Users wearing audio-enabled wearable devices in a common acoustic environment, such as a meeting, classroom session, guided tour, restaurant, or other multi-user scenario in which multiple users hear similar audio signals, may each capture overlapping portions of these signals and ambient sound, but these audio signals may differ from one another with respect to arrival timing, relative amplitude, background-noise content, and other characteristics. As a result, one user may receive a clearer representation of target speech while another user receives a degraded representation distorted by ambient noise or other interfering sounds. Further, independent processing at each device may further increase duplicative compute operations across a particular group of devices, resulting in increased computational burdens on these devices.

The present disclosure describes techniques for shared processing among communicatively coupled wearable devices located in, e.g., a common acoustic environment. More particularly, the disclosed techniques may use a shared processing system corresponding to a software-based processing framework executed by one or more wearable devices and, in some aspects, an external device, such that the framework coordinates approximately real-time exchange of sensor data and output data among the devices. In this manner, a selected wearable device may receive sensor data from one or more other wearable devices and may perform processing using aggregated multi-device inputs to generate processed audio for the benefit of multiple users exposed to similar audio signals.

The application is further directed to generating processed audio from multiple instances of the same underlying speech captured from different respective spatial perspectives. For example, a selected wearable device may detect a first instance of an audio signal, receive a second instance of the audio signal from another wearable device, and process the respective signal instances to generate output such as enhanced speech, translated speech, conversation-focus audio, or audio associated with source tracking. In some aspects, the selected wearable device may transmit the resulting processed audio to one or more additional wearable devices for playback, and responsibility for performing a given audio-processing task may remain with the selected wearable device for a period of time or may be handed off among the wearable devices to distribute processing burden, power consumption, or both.

Features from any of the embodiments described herein may be used in combination with one another in accordance with the general principles described herein. These and other embodiments, features, and advantages will be more fully understood upon reading the following detailed description in conjunction with the accompanying drawings and claims.

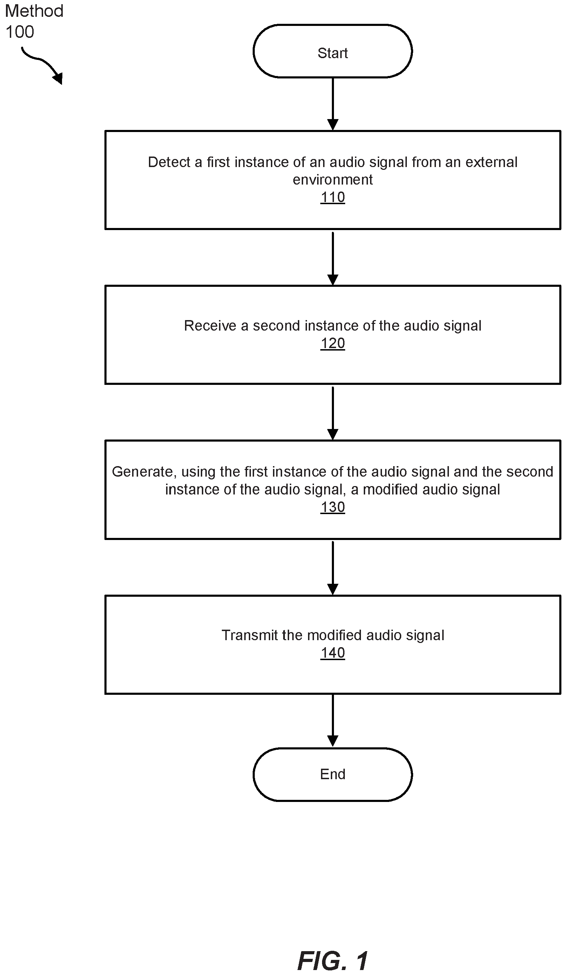

FIG. 1 is a flow diagram of a computer-implemented method 100 for implementing multi-device input based shared processing techniques as described in the present disclosure.

At step 110, a first device may detect, by an audio sensor of the first device, a first instance of an audio signal from an environment external to the first device. In some aspects, the first device may correspond to a wearable device positioned near one or more additional wearable devices such that the devices may obtain, using audio sensors included as part of these devices, overlapping portions of the same speech and ambient sound. Specifically, the detected first instance may correspond to local sensor input captured by the first device from a physical setting in which multiple users are exposed to similar sound signals as part of, e.g., a common acoustic environment. In aspects, the common acoustic environment may correspond to a meeting in which multiple users are seated together while wearing respective wearable devices. A speaker may make a comment in the meeting environment, and an audio sensor of a first wearable device may capture a first instance of the resulting audio signal. Because the first wearable device may be positioned at a particular location relative to the speaker and surrounding noise sources, the first instance may correspond to one spatially specific representation of the underlying speech.

At step 120, the first device may receive a second instance of the audio signal from a second device communicatively coupled to the first device. In some aspects, the first and second devices may exchange information approximately in real time through, e.g., a communication network that supports transmission of raw or partially processed sensor data between devices. The received second instance may correspond to additional audio data captured by the second device from the same external environment and may provide a different representation of the same underlying speech due to differences in device position, arrival timing, relative amplitude, background-noise content, or other characteristics.

For example, during the meeting environment described above, a second wearable device worn by another user may obtain a second instance of the same audio signal produced by the speaker's comment. The first wearable device may receive the second instance from the second wearable device through the communication network while the users remain in the shared acoustic scene. Because the second wearable device may be located closer to a noise source or otherwise differently positioned relative to the speaker, the second instance may be less clear than the first instance or may otherwise differ in signal characteristics from the first instance.

At step 130, the first device may generate, using the first instance of the audio signal and the second instance of the audio signal, a modified audio signal. In some aspects, the first device may be selected by the shared processing system to perform processing using aggregated multi-device inputs for the benefit of a group of users. The modified audio signal may correspond to processed audio generated by analyzing and processing the first and second instances of the audio signal and may include, for example, enhanced speech, translated speech, conversation-focus audio, or audio associated with source tracking. In some aspects, generating the modified audio signal may include temporally aligning the first and second instances, comparing relative arrival timing and signal level characteristics across the devices, and combining the signals using beamforming, spectral filtering, adaptive noise cancellation, dereverberation, voice-activity detection, source-separation processing, or one or more other speech-enhancement techniques.

For example, the first wearable device may receive the second instance from the second wearable device and may analyze both the first instance and the second instance in order to distinguish target speech from cafeteria noise, adjacent conversations, dish or utensil noise, HVAC noise, or other interfering sounds present in the environment. Because the first wearable device may receive audio-related information from multiple wearable devices located around a table, the first wearable device may generate the modified audio signal using a broader set of spatial and sensor information than would be available from any one device alone. In some aspects, the modified audio signal may correspond to an enhanced audio signal that preserves speech associated with a target speaker while reducing non-target sounds captured from the surrounding environment.

At step 140, the first device may transmit the modified audio signal to one or more additional devices for output. In some aspects, the communication network may support transmission of processed audio generated by a selected device to one or more additional devices for playback, thereby allowing multiple users to benefit from a shared audio-processing result. Such transmission may reduce duplicative processing across the devices because one device may perform a given audio-processing task while another device outputs the resulting audio.

In aspects, after generating the modified audio signal, the first wearable device may transmit the modified audio signal through the communication network to the second wearable device for playback by that device. In some aspects, the transmitted signal may correspond to a clearer version of the detected speech, an enhanced audio signal, translated speech, conversation-focus audio, or another processed audio output generated using shared multi-device inputs. In this manner, the first wearable device may operate as an implementation device for a group of nearby wearable devices that share the same acoustic scene, while responsibility for performing the processing may remain with the first wearable device for a selected interval or may later be handed off to another device.

In some aspects, the techniques disclosed herein may be implemented as part of a common acoustic environment in which multiple wearable devices are communicatively coupled and are exposed to, e.g., similar sound signals. Each wearable device may obtain local sensor inputs, and the devices may exchange sensor data and output data approximately in real time through the communication network. A shared processing system, which may correspond to a software-based processing framework executed by one or more wearable devices and, in some aspects, an external device, may coordinate this exchange of information and may cause one selected device to perform processing using multi-device inputs.

In operation, a first wearable device may detect a first instance of an audio signal from an external environment using an audio sensor of the first wearable device. A second wearable device in the same environment may also capture a second instance of the same underlying speech or other sound. Because the devices may be positioned at different locations relative to a speaker and surrounding noise sources, the first instance and the second instance may differ from one another with respect to arrival timing, relative amplitude, background-noise content, or other characteristics. The selected device may receive the second instance from the other wearable device and may process both instances together. In some aspects, the selected device may temporally align the respective signal instances, compare relative arrival timing and signal level characteristics across the devices, and combine the signals using one or more speech-enhancement techniques.

The processing may also use additional sensor data, such as camera data, motion data, or head-orientation data, to identify a target speaker, estimate a direction associated with speech, or support conversation-focus selection. Based on this processing, the selected device may generate processed audio, such as enhanced speech, translated speech, conversation-focus audio, or audio associated with source tracking. After the processed audio is generated, the selected device may transmit the resulting audio to one or more additional wearable devices for playback. In some aspects, the selected device may remain responsible for a given audio-processing task for a selected interval, or that responsibility may later be handed off to another wearable device based on changing operating conditions. In this manner, the devices may operate cooperatively rather than independently while continuing to provide audio output to their respective users.

This arrangement may improve audio quality because the selected device may generate output using a broader set of spatial and sensor information than would be available from any one device alone. By analyzing multiple instances of the same underlying speech from different respective spatial perspectives, the system may better distinguish target speech from background noise, adjacent conversations, dish or utensil noise, HVAC noise, and other interfering sounds. As a result, the processed audio may preserve speech associated with a target speaker while reducing non-target sounds, thereby making the shared audio stream cleaner and more intelligible for users in the common acoustic environment.

This arrangement may also improve efficiency across the group of devices. Instead of requiring each nearby wearable device to independently perform duplicative processing on overlapping recordings of, e.g., the same audio signal, one selected device may perform the processing once for the device group and distribute the resulting audio to other devices for playback. This shared-output approach may reduce duplicative compute operations, battery consumption, and thermal load across the wearable devices, and the ability to hand off processing responsibility among devices may further distribute processing burden and power consumption over time. In some aspects, the same cooperative framework may also support approximately real-time translation, conversation focus, source tracking, and other audio-processing operations for the benefit of multiple users.

### Example Embodiments

Example 1: A computer-implemented method comprising: detecting, by an audio sensor communicatively coupled to the computer of a first device, a first instance of an audio signal from an environment external to the first device, the first device being communicatively coupled to a second device that receives a second instance of the audio signal; receiving, by the first device, a second instance of the audio signal from the second device that is communicatively coupled to the first device; generating by the first device, using the first instance of the audio signal and the second instance of the audio signal, a modified audio signal; and transmitting the modified audio signal to the second device for output.

Example 2: The computer-implemented method of Example 1, wherein each of the first device and the second device is a wearable device.

Example 3: The computer-implemented method of Example 1 or Example 2, wherein the generating of the modified audio signal comprises comparing a first arrival time of the first instance of the audio signal and a second arrival time of the second instance of the audio signal.

Example 4: The computer-implemented method of any of Examples 1-3, wherein the generating of the modified audio signal further comprises comparing first signal level characteristics of the first instance of the audio signal to second signal level characteristics of the second instance of the audio signal.

Example 5: The computer-implemented method of any of Examples 1-4, wherein the generating of the modified audio signal further comprises temporally aligning the first instance of the audio signal with the second instance of the audio signal.

Example 6: The computer-implemented method of any of Examples 1-5, wherein the generating of the modified audio signal further comprises combining the first instance of the audio signal and the second instance of the audio signal using at least one of beamforming, spectral filtering, adaptive noise cancellation, dereverberation, voice-activity detection, or source-separation processing.

Example 7: The computer-implemented method of any of Examples 1-6, 'further comprising implementing a translation operation on the modified audio signal.

Example 8: The computer-implemented method of any of Examples 1-7, wherein the modified audio signal comprises an enhanced version of the audio signal.

Example 9: A system comprising: a first device communicatively coupled to at least a second device, wherein the first device includes: an audio sensor that detects a first instance of an audio signal from an environment external to the first device; at least one physical processor; and physical memory comprising computer-executable instructions that, when executed by the physical processor, cause the physical processor to: receive a second instance of the audio signal from the second device; generate, using the first instance of the audio signal and the second instance of the audio signal, a modified audio signal; and transmit the modified audio signal to the second device for output.

Example 10: The system of Example 9, wherein each of the first device and the second device is a wearable device.

Example 11: The system of Example 9 or Example 10, wherein the physical processor generating the modified audio signal upon execution of the computer-executable instructions comprises comparing a first arrival time of the first instance of the audio signal and a second arrival time of the second instance of the audio signal.

Example 12: The system of any of Examples 9-11, wherein the physical processor generating the modified audio signal upon execution of the computer-executable instructions comprises comparing first signal level characteristics of the first instance of the audio signal to second signal level characteristics of the second instance of the audio signal.

Example 13: The system of any of Examples 9-12, wherein the physical processor generating the modified audio signal upon execution of the computer-executable instructions comprises temporally aligning the first instance of the audio signal with the second instance of the audio signal.

Example 14: The system of any of Examples 9-13, wherein the physical processor generating the modified audio signal upon execution of the computer-executable instructions comprises combining the first instance of the audio signal and the second instance of the audio signal using at least one of beamforming, spectral filtering, adaptive noise cancellation, dereverberation, voice-activity detection, or source-separation processing.

Example 15: The system of any of Examples 9-14, wherein computer-executable instructions, when executed by the physical processor, further cause the physical processor to implement a translation operation on the modified audio signal.

Example 16: The system of any of Examples 9-15, wherein the modified audio signal comprises an enhanced version of the audio signal.

Example 17: A non-transitory computer-readable medium comprising one or more computer-executable instructions that, when executed by at least one processor of a first device, cause the at least one processor to: receive, using an audio sensor that is communicatively coupled to the at least one processor, a first instance of an audio signal from an environment external to the first device; receive a second instance of the audio signal from the second device; generate, using the first instance of the audio signal and the second instance of the audio signal, a modified audio signal; and transmit the modified audio signal to the second device for output.

Example 18: The non-transitory computer-readable medium of Example 17, wherein each of the first device and the second device is a wearable device.

Example 19: The non-transitory computer-readable medium of Example 17 or Example 18, wherein the at least one processor generating the modified audio signal upon execution of the one or more computer-executable instructions comprises comparing a first arrival time of the first instance of the audio signal and a second arrival time of the second instance of the audio signal.

Example 20: The non-transitory computer-readable medium of any of Examples 17-20, wherein the at least one processor generating the modified audio signal upon execution of the one or more computer-executable instructions comprises comparing a first arrival time of the first instance of the audio signal and a second arrival time of the second instance of the audio signal.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, in some embodiments, AR may also be associated with applications, products, accessories, services, or some combination thereof, that are used to, for example, create content in an artificial reality and/or are otherwise used in (e.g., to perform activities in) an artificial reality.

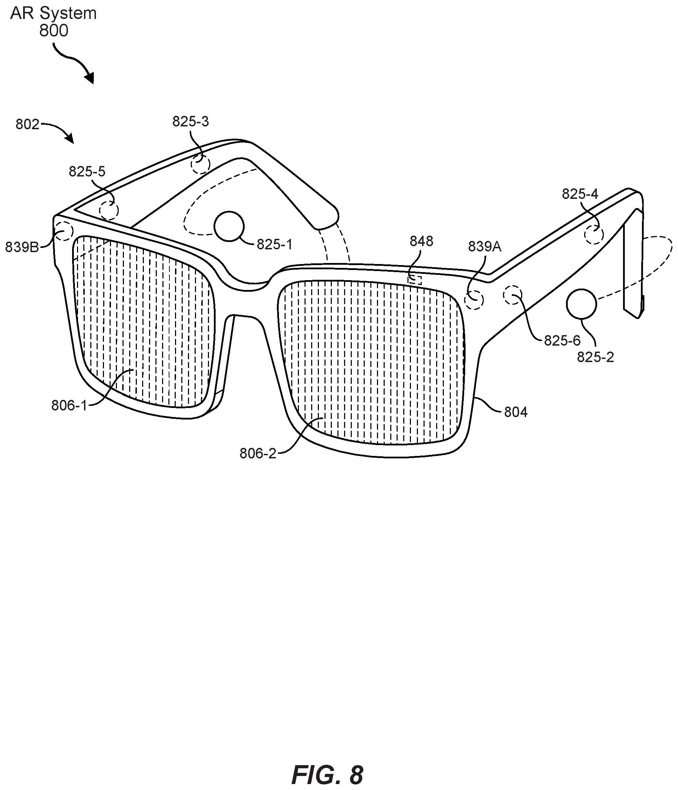

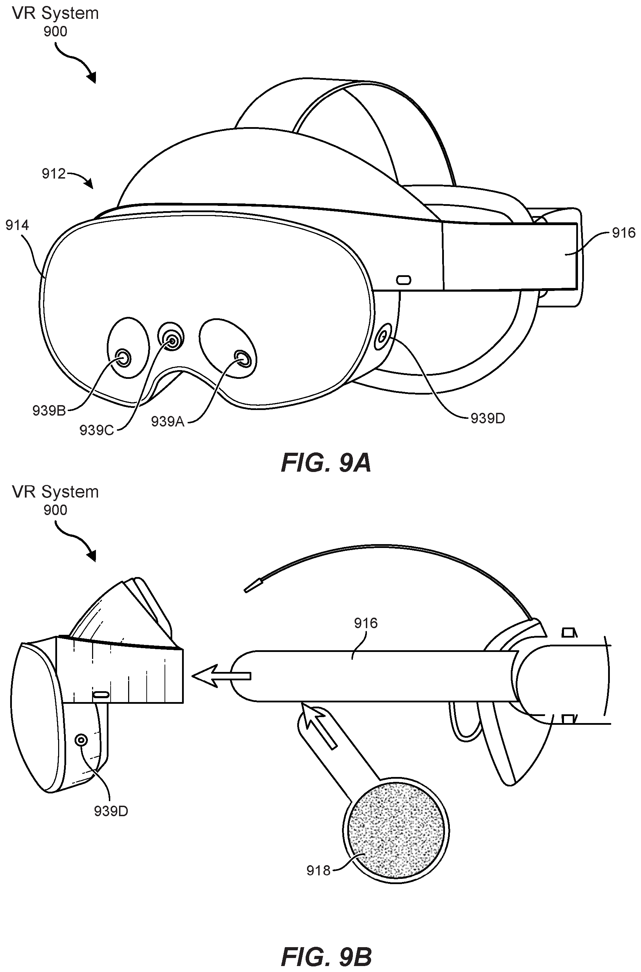

AR systems may be implemented in a variety of different form factors and configurations. Some AR systems may be designed to work without near-eye displays (NEDs). Other AR systems may include a NED that also provides visibility into the real world (such as, e.g., augmented-reality system 800 in FIG. 8) or that visually immerses a user in an artificial reality (such as, e.g., virtual-reality system 900 in FIGS. 9A and 9B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

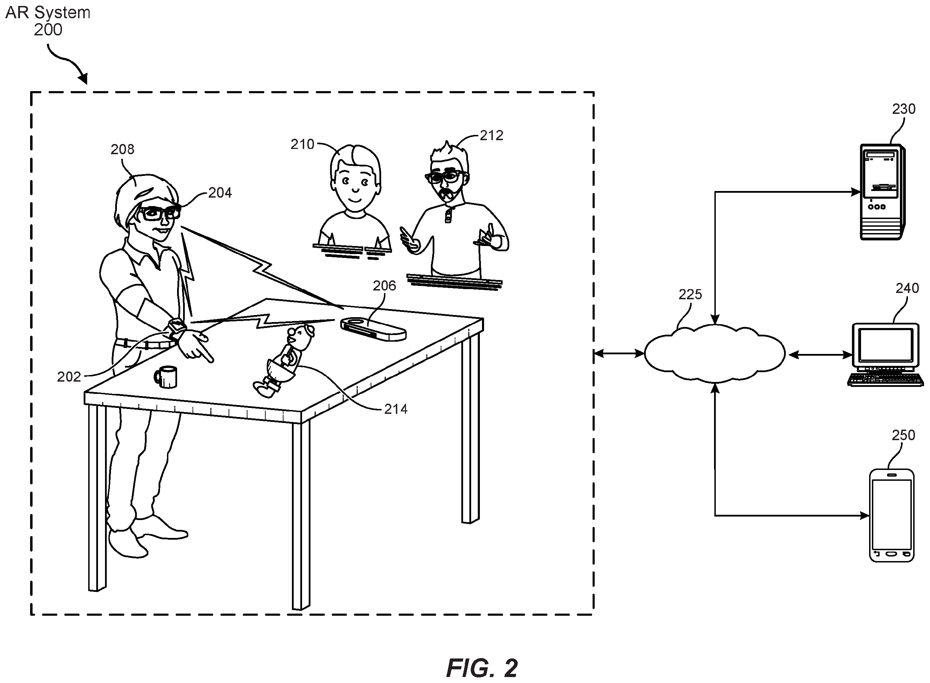

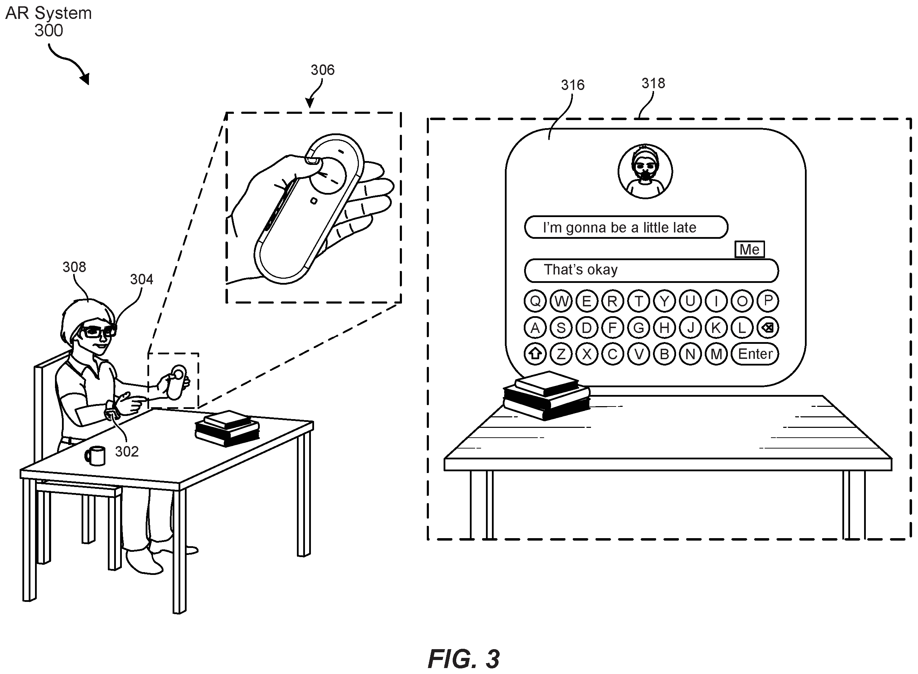

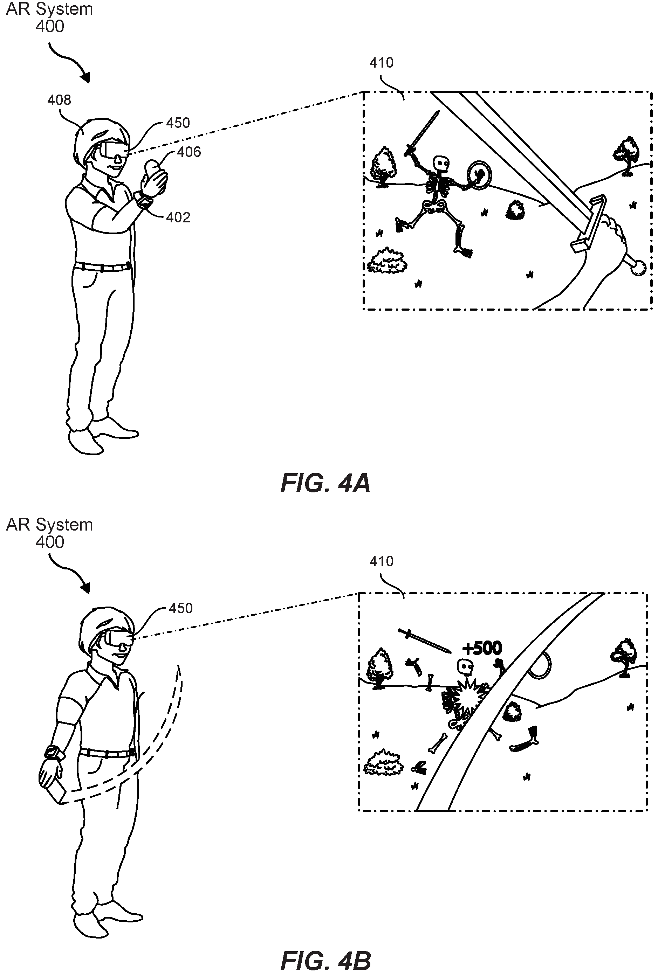

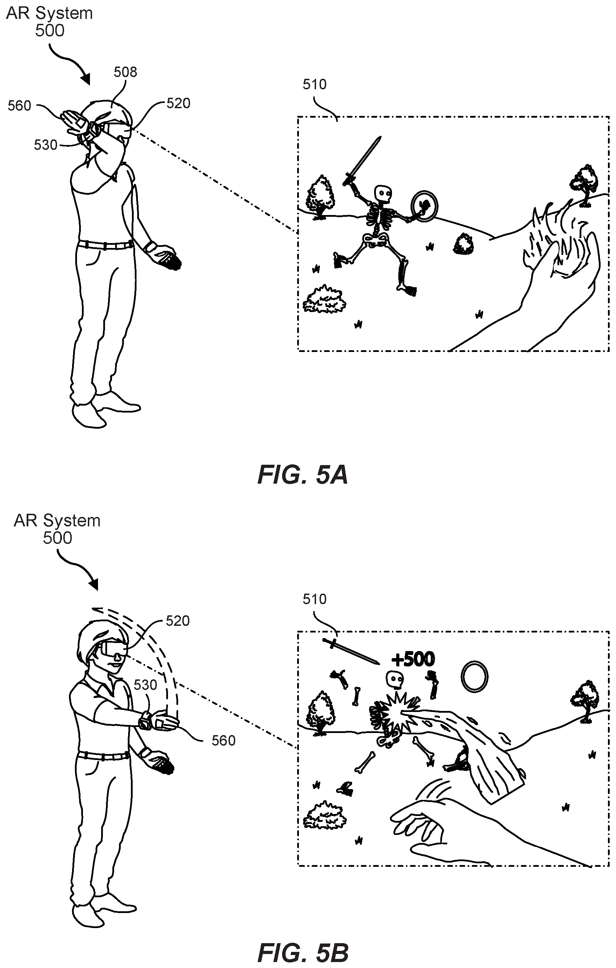

FIGS. 2-5B illustrate example artificial-reality (AR) systems in accordance with some embodiments. FIG. 2 shows a first AR system 200 and first example user interactions using a wrist-wearable device 202, a head-wearable device (e.g., AR glasses 800), and/or a handheld intermediary processing device (HIPD) 206. FIG. 3 shows a second AR system 300 and second example user interactions using a wrist-wearable device 302, AR glasses 304, and/or an HIPD 306. FIGS. 4A and 4B show a third AR system 400 and third example user 408 interactions using a wrist-wearable device 402, a head-wearable device (e.g., VR headset 450), and/or an HIPD 406. FIGS. 5A and 5B show a fourth AR system 500 and fourth example user 508 interactions using a wrist-wearable device 530, VR headset 520, and/or a haptic device 560 (e.g., wearable gloves).

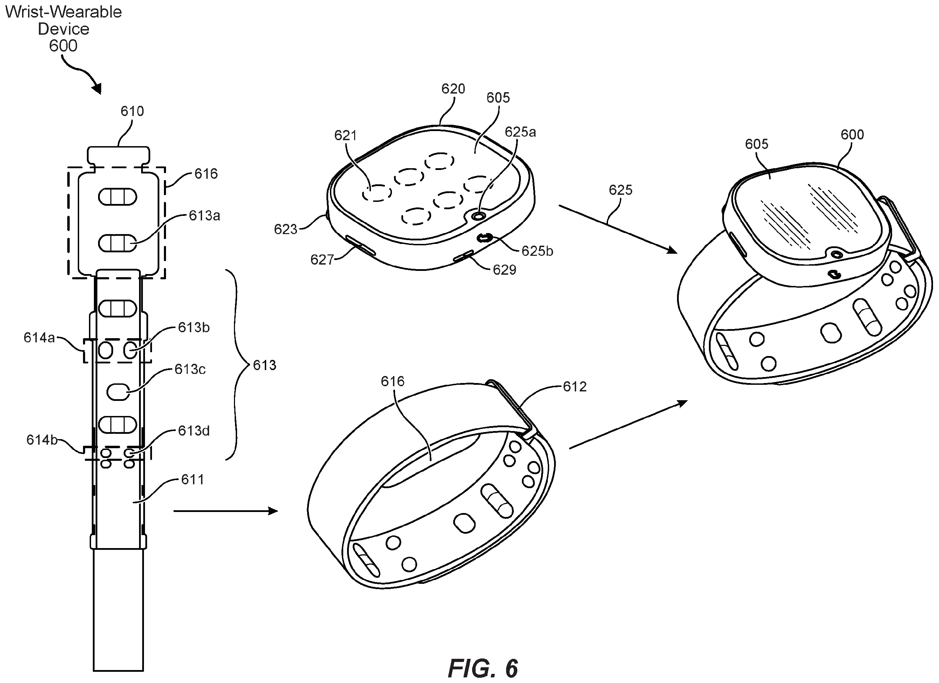

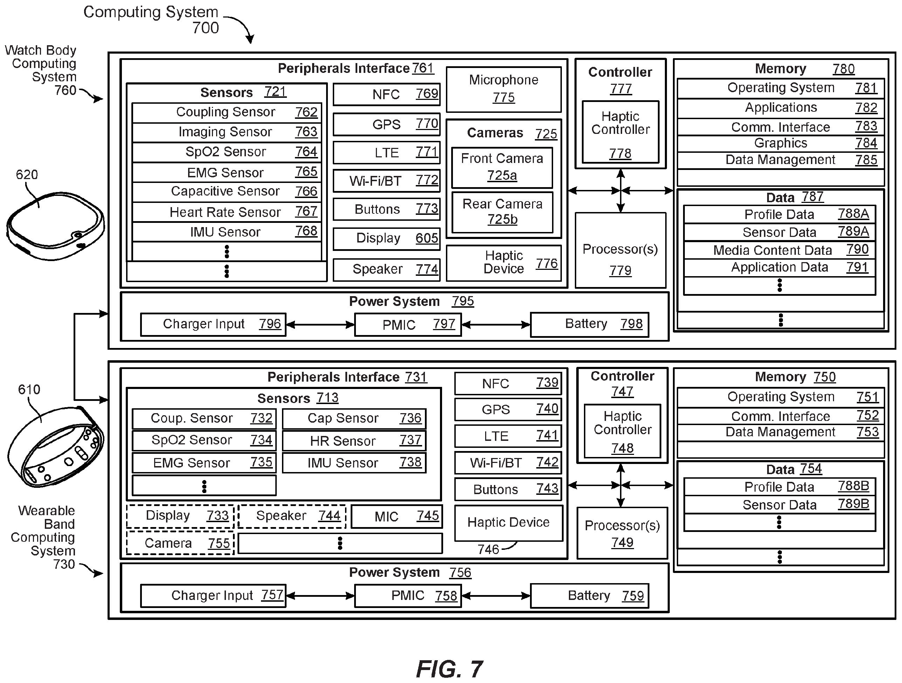

A wrist-wearable device 600, which can be used for wrist-wearable device 202, 302, 402, 530, and one or more of its components, are described below in reference to FIGS. 6 and 7; head-wearable devices 800 and 900, which can respectively be used for AR glasses 204, 304 or VR headset 450, 520, and their one or more components are described below in reference to FIGS. 8-10.

Referring to FIG. 2, wrist-wearable device 202, AR glasses 204, and/or HIPD 206 can communicatively couple via a network 225 (e.g., cellular, near field, Wi-Fi, personal area network, wireless LAN, etc.). Additionally, wrist-wearable device 202, AR glasses 204, and/or HIPD 206 can also communicatively couple with one or more servers 230, computers 240 (e.g., laptops, computers, etc.), mobile devices 250 (e.g., smartphones, tablets, etc.), and/or other electronic devices via network 225 (e.g., cellular, near field, Wi-Fi, personal area network, wireless LAN, etc.).

In FIG. 2, a user 208 is shown wearing wrist-wearable device 202 and AR glasses 204 and having HIPD 206 on their desk. The wrist-wearable device 202, AR glasses 204, and HIPD 206 facilitate user interaction with an AR environment. In particular, as shown by first AR system 200, wrist-wearable device 202, AR glasses 204, and/or HIPD 206 cause presentation of one or more avatars 210, digital representations of contacts 212, and virtual objects 214. As discussed below, user 208 can interact with one or more avatars 210, digital representations of contacts 212, and virtual objects 214 via wrist-wearable device 202, AR glasses 204, and/or HIPD 206.

User 208 can use any of wrist-wearable device 202, AR glasses 204, and/or HIPD 206 to provide user inputs. For example, user 208 can perform one or more hand gestures that are detected by wrist-wearable device 202 (e.g., using one or more EMG sensors and/or IMUs, described below in reference to FIGS. 6 and 7) and/or AR glasses 204 (e.g., using one or more image sensor or camera, described below in reference to FIGS. 8-10) to provide a user input. Alternatively, or additionally, user 208 can provide a user input via one or more touch surfaces of wrist-wearable device 202, AR glasses 204, HIPD 206, and/or voice commands captured by a microphone of wrist-wearable device 202, AR glasses 204, and/or HIPD 206. In some embodiments, wrist-wearable device 202, AR glasses 204, and/or HIPD 206 include a digital assistant to help user 208 in providing a user input (e.g., completing a sequence of operations, suggesting different operations or commands, providing reminders, confirming a command, etc.). In some embodiments, user 208 can provide a user input via one or more facial gestures and/or facial expressions. For example, cameras of wrist-wearable device 202, AR glasses 204, and/or HIPD 206 can track eyes of user 208 for navigating a user interface.

Wrist-wearable device 202, AR glasses 204, and/or HIPD 206 can operate alone or in conjunction to allow user 208 to interact with the AR environment. In some embodiments, HIPD 206 is configured to operate as a central hub or control center for the wrist-wearable device 202, AR glasses 204, and/or another communicatively coupled device. For example, user 208 can provide an input to interact with the AR environment at any of wrist-wearable device 202, AR glasses 204, and/or HIPD 206, and HIPD 206 can identify one or more back-end and front-end tasks to cause the performance of the requested interaction and distribute instructions to cause the performance of the one or more back-end and front-end tasks at wrist-wearable device 202, AR glasses 204, and/or HIPD 206. In some embodiments, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). HIPD 206 can perform the back-end tasks and provide wrist-wearable device 202 and/or AR glasses 204 operational data corresponding to the performed back-end tasks such that wrist-wearable device 202 and/or AR glasses 204 can perform the front-end tasks. In this way, HIPD 206, which has more computational resources and greater thermal headroom than wrist-wearable device 202 and/or AR glasses 204, performs computationally intensive tasks and reduces the computer resource utilization and/or power usage of wrist-wearable device 202 and/or AR glasses 204.

In the example shown by first AR system 200, HIPD 206 identifies one or more back-end tasks and front-end tasks associated with a user request to initiate an AR video call with one or more other users (represented by avatar 210 and the digital representation of contact 212) and distributes instructions to cause the performance of the one or more back-end tasks and front-end tasks. In particular, HIPD 206 performs back-end tasks for processing and/or rendering image data (and other data) associated with the AR video call and provides operational data associated with the performed back-end tasks to AR glasses 204 such that the AR glasses 204 perform front-end tasks for presenting the AR video call (e.g., presenting avatar 210 and digital representation of contact 212).

In some embodiments, HIPD 206 can operate as a focal or anchor point for causing the presentation of information. This allows user 208 to be generally aware of where information is presented. For example, as shown in first AR system 200, avatar 210 and the digital representation of contact 212 are presented above HIPD 206. In particular, HIPD 206 and AR glasses 204 operate in conjunction to determine a location for presenting avatar 210 and the digital representation of contact 212. In some embodiments, information can be presented a predetermined distance from HIPD 206 (e.g., within 5 meters). For example, as shown in first AR system 200, virtual object 214 is presented on the desk some distance from HIPD 206. Similar to the above example, HIPD 206 and AR glasses 204 can operate in conjunction to determine a location for presenting virtual object 214. Alternatively, in some embodiments, presentation of information is not bound by HIPD 206. More specifically, avatar 210, digital representation of contact 212, and virtual object 214 do not have to be presented within a predetermined distance of HIPD 206.

User inputs provided at wrist-wearable device 202, AR glasses 204, and/or HIPD 206 are coordinated such that the user can use any device to initiate, continue, and/or complete an operation. For example, user 208 can provide a user input to AR glasses 204 to cause AR glasses 204 to present virtual object 214 and, while virtual object 214 is presented by AR glasses 204, user 208 can provide one or more hand gestures via wrist-wearable device 202 to interact and/or manipulate virtual object 214.

FIG. 3 shows a user 308 wearing a wrist-wearable device 302 and AR glasses 304, and holding an HIPD 306. In second AR system 300, the wrist-wearable device 302, AR glasses 304, and/or HIPD 306 are used to receive and/or provide one or more messages to a contact of user 308. In particular, wrist-wearable device 302, AR glasses 304, and/or HIPD 306 detect and coordinate one or more user inputs to initiate a messaging application and prepare a response to a received message via the messaging application.

In some embodiments, user 308 initiates, via a user input, an application on wrist-wearable device 302, AR glasses 304, and/or HIPD 306 that causes the application to initiate on at least one device. For example, in second AR system 300, user 308 performs a hand gesture associated with a command for initiating a messaging application (represented by messaging user interface 316), wrist-wearable device 302 detects the hand gesture and, based on a determination that user 308 is wearing AR glasses 304, causes AR glasses 304 to present a messaging user interface 316 of the messaging application. AR glasses 304 can present messaging user interface 316 to user 308 via its display (e.g., as shown by a field of view 318 of user 308). In some embodiments, the application is initiated and executed on the device (e.g., wrist-wearable device 302, AR glasses 304, and/or HIPD 306) that detects the user input to initiate the application, and the device provides another device operational data to cause the presentation of the messaging application. For example, wrist-wearable device 302 can detect the user input to initiate a messaging application, initiate and run the messaging application, and provide operational data to AR glasses 304 and/or HIPD 306 to cause presentation of the messaging application. Alternatively, the application can be initiated and executed at a device other than the device that detected the user input. For example, wrist-wearable device 302 can detect the hand gesture associated with initiating the messaging application and cause HIPD 306 to run the messaging application and coordinate the presentation of the messaging application.

Further, user 308 can provide a user input provided at wrist-wearable device 302, AR glasses 304, and/or HIPD 306 to continue and/or complete an operation initiated at another device. For example, after initiating the messaging application via wrist-wearable device 302 and while AR glasses 304 present messaging user interface 316, user 308 can provide an input at HIPD 306 to prepare a response (e.g., shown by the swipe gesture performed on HIPD 306). Gestures performed by user 308 on HIPD 306 can be provided and/or displayed on another device. For example, a swipe gestured performed on HIPD 306 is displayed on a virtual keyboard of messaging user interface 316 displayed by AR glasses 304.

In some embodiments, wrist-wearable device 302, AR glasses 304, HIPD 306, and/or any other communicatively coupled device can present one or more notifications to user 308. The notification can be an indication of a new message, an incoming call, an application update, a status update, etc. User 308 can select the notification via wrist-wearable device 302, AR glasses 304, and/or HIPD 306 and can cause presentation of an application or operation associated with the notification on at least one device. For example, user 308 can receive a notification that a message was received at wrist-wearable device 302, AR glasses 304, HIPD 306, and/or any other communicatively coupled device and can then provide a user input at wrist-wearable device 302, AR glasses 304, and/or HIPD 306 to review the notification, and the device detecting the user input can cause an application associated with the notification to be initiated and/or presented at wrist-wearable device 302, AR glasses 304, and/or HIPD 306.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 304 can present to user 308 game application data, and HIPD 306 can be used as a controller to provide inputs to the game. Similarly, user 308 can use wrist-wearable device 302 to initiate a camera of AR glasses 304, and user 308 can use wrist-wearable device 302, AR glasses 304, and/or HIPD 306 to manipulate the image capture (e.g., zoom in or out, apply filters, etc.) and capture image data.

Users may interact with the devices disclosed herein in a variety of ways. For example, as shown in FIGS. 4A and 4B, a user 408 may interact with an AR system 400 by donning a VR headset 450 while holding HIPD 406 and wearing wrist-wearable device 402. In this example, AR system 400 may enable a user to interact with a game 410 by swiping their arm. One or more of VR headset 450, HIPD 406, and wrist-wearable device 402 may detect this gesture and, in response, may display a sword strike in game 410. Similarly, in FIGS. 5A and 5B, a user 508 may interact with an AR system 500 by donning a VR headset 520 while wearing haptic device 560 and wrist-wearable device 530. In this example, AR system 500 may enable a user to interact with a game 510 by swiping their arm. One or more of VR headset 520, haptic device 560, and wrist-wearable device 530 may detect this gesture and, in response, may display a spell being cast in game 410.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some embodiments discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some embodiments, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by embodiments described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various embodiments described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configured to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some embodiments, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 6 and 7 illustrate an example wrist-wearable device 600 and an example computer system 700, in accordance with some embodiments. Wrist-wearable device 600 is an instance of wearable device 202 described in FIG. 2 herein, such that the wearable device 202 should be understood to have the features of the wrist-wearable device 600 and vice versa. FIG. 7 illustrates components of the wrist-wearable device 600, which can be used individually or in combination, including combinations that include other electronic devices and/or electronic components.

FIG. 6 shows a wearable band 610 and a watch body 620 (or capsule) being coupled, as discussed below, to form wrist-wearable device 600. Wrist-wearable device 600 can perform various functions and/or operations associated with navigating through user interfaces and selectively opening applications as well as the functions and/or operations described above with reference to FIGS. 2-5B.

As will be described in more detail below, operations executed by wrist-wearable device 600 can include (i) presenting content to a user (e.g., displaying visual content via a display 605), (ii) detecting (e.g., sensing) user input (e.g., sensing a touch on peripheral button 623 and/or at a touch screen of the display 605, a hand gesture detected by sensors (e.g., biopotential sensors)), (iii) sensing biometric data (e.g., neuromuscular signals, heart rate, temperature, sleep, etc.) via one or more sensors 613, messaging (e.g., text, speech, video, etc.); image capture via one or more imaging devices or cameras 625, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 620, independently in wearable band 610, and/or via an electronic communication between watch body 620 and wearable band 610. In some embodiments, functions can be executed on wrist-wearable device 600 while an AR environment is being presented (e.g., via one of AR systems 200 to 500). The wearable devices described herein can also be used with other types of AR environments.

Wearable band 610 can be configured to be worn by a user such that an inner surface of a wearable structure 611 of wearable band 610 is in contact with the user's skin. In this example, when worn by a user, sensors 613 may contact the user's skin. In some examples, one or more of sensors 613 can sense biometric data such as a user's heart rate, a saturated oxygen level, temperature, sweat level, neuromuscular signals, or a combination thereof. One or more of sensors 613 can also sense data about a user's environment including a user's motion, altitude, location, orientation, gait, acceleration, position, or a combination thereof. In some embodiment, one or more of sensors 613 can be configured to track a position and/or motion of wearable band 610. One or more of sensors 613 can include any of the sensors defined above and/or discussed below with respect to FIG. 6.

One or more of sensors 613 can be distributed on an inside and/or an outside surface of wearable band 610. In some embodiments, one or more of sensors 613 are uniformly spaced along wearable band 610. Alternatively, in some embodiments, one or more of sensors 613 are positioned at distinct points along wearable band 610. As shown in FIG. 6, one or more of sensors 613 can be the same or distinct. For example, in some embodiments, one or more of sensors 613 can be shaped as a pill (e.g., sensor 613a), an oval, a circle a square, an oblong (e.g., sensor 613c) and/or any other shape that maintains contact with the user's skin (e.g., such that neuromuscular signal and/or other biometric data can be accurately measured at the user's skin). In some embodiments, one or more sensors of 613 are aligned to form pairs of sensors (e.g., for sensing neuromuscular signals based on differential sensing within each respective sensor). For example, sensor 613b may be aligned with an adjacent sensor to form sensor pair 614a and sensor 613d may be aligned with an adjacent sensor to form sensor pair 614b. In some embodiments, wearable band 610 does not have a sensor pair. Alternatively, in some embodiments, wearable band 610 has a predetermined number of sensor pairs (one pair of sensors, three pairs of sensors, four pairs of sensors, six pairs of sensors, sixteen pairs of sensors, etc.).

Wearable band 610 can include any suitable number of sensors 613. In some embodiments, the number and arrangement of sensors 613 depends on the particular application for which wearable band 610 is used. For instance, wearable band 610 can be configured as an armband, wristband, or chest-band that include a plurality of sensors 613 with different number of sensors 613, a variety of types of individual sensors with the plurality of sensors 613, and different arrangements for each use case, such as medical use cases as compared to gaming or general day-to-day use cases.

In accordance with some embodiments, wearable band 610 further includes an electrical ground electrode and a shielding electrode. The electrical ground and shielding electrodes, like the sensors 613, can be distributed on the inside surface of the wearable band 610 such that they contact a portion of the user's skin. For example, the electrical ground and shielding electrodes can be at an inside surface of a coupling mechanism 616 or an inside surface of a wearable structure 611. The electrical ground and shielding electrodes can be formed and/or use the same components as sensors 613. In some embodiments, wearable band 610 includes more than one electrical ground electrode and more than one shielding electrode.

Sensors 613 can be formed as part of wearable structure 611 of wearable band 610. In some embodiments, sensors 613 are flush or substantially flush with wearable structure 611 such that they do not extend beyond the surface of wearable structure 611. While flush with wearable structure 611, sensors 613 are still configured to contact the user's skin (e.g., via a skin-contacting surface). Alternatively, in some embodiments, sensors 613 extend beyond wearable structure 611 a predetermined distance (e.g., 0.1 - 2 mm) to make contact and depress into the user's skin. In some embodiment, sensors 613 are coupled to an actuator (not shown) configured to adjust an extension height (e.g., a distance from the surface of wearable structure 611) of sensors 613 such that sensors 613 make contact and depress into the user's skin. In some embodiments, the actuators adjust the extension height between 0.01 mm - 1.2 mm. This may allow a the user to customize the positioning of sensors 613 to improve the overall comfort of the wearable band 610 when worn while still allowing sensors 613 to contact the user's skin. In some embodiments, sensors 613 are indistinguishable from wearable structure 611 when worn by the user.

Wearable structure 611 can be formed of an elastic material, elastomers, etc., configured to be stretched and fitted to be worn by the user. In some embodiments, wearable structure 611 is a textile or woven fabric. As described above, sensors 613 can be formed as part of a wearable structure 611. For example, sensors 613 can be molded into the wearable structure 611, be integrated into a woven fabric (e.g., sensors 613 can be sewn into the fabric and mimic the pliability of fabric and can and/or be constructed from a series woven strands of fabric).

Wearable structure 611 can include flexible electronic connectors that interconnect sensors 613, the electronic circuitry, and/or other electronic components (described below in reference to FIG. 7) that are enclosed in wearable band 610. In some embodiments, the flexible electronic connectors are configured to interconnect sensors 613, the electronic circuitry, and/or other electronic components of wearable band 610 with respective sensors and/or other electronic components of another electronic device (e.g., watch body 620). The flexible electronic connectors are configured to move with wearable structure 611 such that the user adjustment to wearable structure 611 (e.g., resizing, pulling, folding, etc.) does not stress or strain the electrical coupling of components of wearable band 610.

As described above, wearable band 610 is configured to be worn by a user. In particular, wearable band 610 can be shaped or otherwise manipulated to be worn by a user. For example, wearable band 610 can be shaped to have a substantially circular shape such that it can be configured to be worn on the user's lower arm or wrist. Alternatively, wearable band 610 can be shaped to be worn on another body part of the user, such as the user's upper arm (e.g., around a bicep), forearm, chest, legs, etc. Wearable band 610 can include a retaining mechanism 612 (e.g., a buckle, a hook and loop fastener, etc.) for securing wearable band 610 to the user's wrist or other body part. While wearable band 610 is worn by the user, sensors 613 sense data (referred to as sensor data) from the user's skin. In some examples, sensors 613 of wearable band 610 obtain (e.g., sense and record) neuromuscular signals.

The sensed data (e.g., sensed neuromuscular signals) can be used to detect and/or determine the user's intention to perform certain motor actions. In some examples, sensors 613 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 605 of wrist-wearable device 600 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 613 can be used to provide a user with an enhanced interaction with a physical object (e.g., devices communicatively coupled with wearable band 610) and/or a virtual object in an artificial-reality application generated by an artificial-reality system (e.g., user interface objects presented on the display 605, or another computing device (e.g., a smartphone)).

In some embodiments, wearable band 610 includes one or more haptic devices 746 (e.g., a vibratory haptic actuator) that are configured to provide haptic feedback (e.g., a cutaneous and/or kinesthetic sensation, etc.) to the user's skin. Sensors 613 and/or haptic devices 746 (shown in FIG. 7) can be configured to operate in conjunction with multiple applications including, without limitation, health monitoring, social media, games, and artificial reality (e.g., the applications associated with artificial reality).

Wearable band 610 can also include coupling mechanism 616 for detachably coupling a capsule (e.g., a computing unit) or watch body 620 (via a coupling surface of the watch body 620) to wearable band 610. For example, a cradle or a shape of coupling mechanism 616 can correspond to shape of watch body 620 of wrist-wearable device 600. In particular, coupling mechanism 616 can be configured to receive a coupling surface proximate to the bottom side of watch body 620 (e.g., a side opposite to a front side of watch body 620 where display 605 is located), such that a user can push watch body 620 downward into coupling mechanism 616 to attach watch body 620 to coupling mechanism 616. In some embodiments, coupling mechanism 616 can be configured to receive a top side of the watch body 620 (e.g., a side proximate to the front side of watch body 620 where display 605 is located) that is pushed upward into the cradle, as opposed to being pushed downward into coupling mechanism 616. In some embodiments, coupling mechanism 616 is an integrated component of wearable band 610 such that wearable band 610 and coupling mechanism 616 are a single unitary structure. In some embodiments, coupling mechanism 616 is a type of frame or shell that allows watch body 620 coupling surface to be retained within or on wearable band 610 coupling mechanism 616 (e.g., a cradle, a tracker band, a support base, a clasp, etc.).

Coupling mechanism 616 can allow for watch body 620 to be detachably coupled to the wearable band 610 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 620 to wearable band 610 and to decouple the watch body 620 from the wearable band 610. For example, a user can twist, slide, turn, push, pull, or rotate watch body 620 relative to wearable band 610, or a combination thereof, to attach watch body 620 to wearable band 610 and to detach watch body 620 from wearable band 610. Alternatively, as discussed below, in some embodiments, the watch body 620 can be decoupled from the wearable band 610 by actuation of a release mechanism 629.

Wearable band 610 can be coupled with watch body 620 to increase the functionality of wearable band 610 (e.g., converting wearable band 610 into wrist-wearable device 600, adding an additional computing unit and/or battery to increase computational resources and/or a battery life of wearable band 610, adding additional sensors to improve sensed data, etc.). As described above, wearable band 610 and coupling mechanism 616 are configured to operate independently (e.g., execute functions independently) from watch body 620. For example, coupling mechanism 616 can include one or more sensors 613 that contact a user's skin when wearable band 610 is worn by the user, with or without watch body 620 and can provide sensor data for determining control commands.

A user can detach watch body 620 from wearable band 610 to reduce the encumbrance of wrist-wearable device 600 to the user. For embodiments in which watch body 620 is removable, watch body 620 can be referred to as a removable structure, such that in these embodiments wrist-wearable device 600 includes a wearable portion (e.g., wearable band 610) and a removable structure (e.g., watch body 620).

Turning to watch body 620, in some examples watch body 620 can have a substantially rectangular or circular shape. Watch body 620 is configured to be worn by the user on their wrist or on another body part. More specifically, watch body 620 is sized to be easily carried by the user, attached on a portion of the user's clothing, and/or coupled to wearable band 610 (forming the wrist-wearable device 600). As described above, watch body 620 can have a shape corresponding to coupling mechanism 616 of wearable band 610. In some embodiments, watch body 620 includes a single release mechanism 629 or multiple release mechanisms (e.g., two release mechanisms 629 positioned on opposing sides of watch body 620, such as spring-loaded buttons) for decoupling watch body 620 from wearable band 610. Release mechanism 629 can include, without limitation, a button, a knob, a plunger, a handle, a lever, a fastener, a clasp, a dial, a latch, or a combination thereof.

A user can actuate release mechanism 629 by pushing, turning, lifting, depressing, shifting, or performing other actions on release mechanism 629. Actuation of release mechanism 629 can release (e.g., decouple) watch body 620 from coupling mechanism 616 of wearable band 610, allowing the user to use watch body 620 independently from wearable band 610 and vice versa. For example, decoupling watch body 620 from wearable band 610 can allow a user to capture images using rear-facing camera 625b. Although release mechanism 629 is shown positioned at a corner of watch body 620, release mechanism 629 can be positioned anywhere on watch body 620 that is convenient for the user to actuate. In addition, in some embodiments, wearable band 610 can also include a respective release mechanism for decoupling watch body 620 from coupling mechanism 616. In some embodiments, release mechanism 629 is optional and watch body 620 can be decoupled from coupling mechanism 616 as described above (e.g., via twisting, rotating, etc.).

Watch body 620 can include one or more peripheral buttons 623 and 627 for performing various operations at watch body 620. For example, peripheral buttons 623 and 627 can be used to turn on or wake (e.g., transition from a sleep state to an active state) display 605, unlock watch body 620, increase or decrease a volume, increase or decrease a brightness, interact with one or more applications, interact with one or more user interfaces, etc. Additionally or alternatively, in some embodiments, display 605 operates as a touch screen and allows the user to provide one or more inputs for interacting with watch body 620.

In some embodiments, watch body 620 includes one or more sensors 621. Sensors 621 of watch body 620 can be the same or distinct from sensors 613 of wearable band 610. Sensors 621 of watch body 620 can be distributed on an inside and/or an outside surface of watch body 620. In some embodiments, sensors 621 are configured to contact a user's skin when watch body 620 is worn by the user. For example, sensors 621 can be placed on the bottom side of watch body 620 and coupling mechanism 616 can be a cradle with an opening that allows the bottom side of watch body 620 to directly contact the user's skin. Alternatively, in some embodiments, watch body 620 does not include sensors that are configured to contact the user's skin (e.g., including sensors internal and/or external to the watch body 620 that are configured to sense data of watch body 620 and the surrounding environment). In some embodiments, sensors 621 are configured to track a position and/or motion of watch body 620.

Watch body 620 and wearable band 610 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 620 and wearable band 610 can share data sensed by sensors 613 and 621, as well as application and device specific information (e.g., active and/or available applications, output devices (e.g., displays, speakers, etc.), input devices (e.g., touch screens, microphones, imaging sensors, etc.).

In some embodiments, watch body 620 can include, without limitation, a front-facing camera 625a and/or a rear-facing camera 625b, sensors 621 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 763), a touch sensor, a sweat sensor, etc.). In some embodiments, watch body 620 can include one or more haptic devices 776 (e.g., a vibratory haptic actuator) that is configured to provide haptic feedback (e.g., a cutaneous and/or kinesthetic sensation, etc.) to the user. Sensors 721 and/or haptic device 776 can also be configured to operate in conjunction with multiple applications including, without limitation, health monitoring applications, social media applications, game applications, and artificial reality applications (e.g., the applications associated with artificial reality).

As described above, watch body 620 and wearable band 610, when coupled, can form wrist-wearable device 600. When coupled, watch body 620 and wearable band 610 may operate as a single device to execute functions (operations, detections, communications, etc.) described herein. In some embodiments, each device may be provided with particular instructions for performing the one or more operations of wrist-wearable device 600. For example, in accordance with a determination that watch body 620 does not include neuromuscular signal sensors, wearable band 610 can include alternative instructions for performing associated instructions (e.g., providing sensed neuromuscular signal data to watch body 620 via a different electronic device). Operations of wrist-wearable device 600 can be performed by watch body 620 alone or in conjunction with wearable band 610 (e.g., via respective processors and/or hardware components) and vice versa. In some embodiments, operations of wrist-wearable device 600, watch body 620, and/or wearable band 610 can be performed in conjunction with one or more processors and/or hardware components.

As described below with reference to the block diagram of FIG. 7, wearable band 610 and/or watch body 620 can each include independent resources required to independently execute functions. For example, wearable band 610 and/or watch body 620 can each include a power source (e.g., a battery), a memory, data storage, a processor (e.g., a central processing unit (CPU)), communications, a light source, and/or input/output devices.

FIG. 7 shows block diagrams of a computing system 730 corresponding to wearable band 610 and a computing system 760 corresponding to watch body 620 according to some embodiments. Computing system 700 of wrist-wearable device 600 may include a combination of components of wearable band computing system 730 and watch body computing system 760, in accordance with some embodiments.

Watch body 620 and/or wearable band 610 can include one or more components shown in watch body computing system 760. In some embodiments, a single integrated circuit may include all or a substantial portion of the components of watch body computing system 760 included in a single integrated circuit. Alternatively, in some embodiments, components of the watch body computing system 760 may be included in a plurality of integrated circuits that are communicatively coupled. In some embodiments, watch body computing system 760 may be configured to couple (e.g., via a wired or wireless connection) with wearable band computing system 730, which may allow the computing systems to share components, distribute tasks, and/or perform other operations described herein (individually or as a single device).

Watch body computing system 760 can include one or more processors 779, a controller 777, a peripherals interface 761, a power system 795, and memory (e.g., a memory 780).

Power system 795 can include a charger input 796, a power-management integrated circuit (PMIC) 797, and a battery 798. In some embodiments, a watch body 620 and a wearable band 610 can have respective batteries (e.g., battery 798 and 759) and can share power with each other. Watch body 620 and wearable band 610 can receive a charge using a variety of techniques. In some embodiments, watch body 620 and wearable band 610 can use a wired charging assembly (e.g., power cords) to receive the charge. Alternatively, or in addition, watch body 620 and/or wearable band 610 can be configured for wireless charging. For example, a portable charging device can be designed to mate with a portion of watch body 620 and/or wearable band 610 and wirelessly deliver usable power to battery 798 of watch body 620 and/or battery 759 of wearable band 610. Watch body 620 and wearable band 610 can have independent power systems (e.g., power system 795 and 756, respectively) to enable each to operate independently. Watch body 620 and wearable band 610 can also share power (e.g., one can charge the other) via respective PMICs (e.g., PMICs 797 and 758) and charger inputs (e.g., 757 and 796) that can share power over power and ground conductors and/or over wireless charging antennas.

In some embodiments, peripherals interface 761 can include one or more sensors 721. Sensors 721 can include one or more coupling sensors 762 for detecting when watch body 620 is coupled with another electronic device (e.g., a wearable band 610). Sensors 721 can include one or more imaging sensors 763 (e.g., one or more of cameras 725, and/or separate imaging sensors 763 (e.g., thermal-imaging sensors)). In some embodiments, sensors 721 can include one or more SpO2 sensors 764. In some embodiments, sensors 721 can include one or more biopotential-signal sensors (e.g., EMG sensors 765, which may be disposed on an interior, user-facing portion of watch body 620 and/or wearable band 610). In some embodiments, sensors 721 may include one or more capacitive sensors 766. In some embodiments, sensors 721 may include one or more heart rate sensors 767. In some embodiments, sensors 721 may include one or more IMU sensors 768. In some embodiments, one or more IMU sensors 768 can be configured to detect movement of a user's hand or other location where watch body 620 is placed or held.

In some embodiments, one or more of sensors 721 may provide an example human-machine interface. For example, a set of neuromuscular sensors, such as EMG sensors 765, may be arranged circumferentially around wearable band 610 with an interior surface of EMG sensors 765 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 610 can be used to generate control information for controlling an augmented reality system, a robot, controlling a vehicle, scrolling through text, controlling a virtual avatar, or any other suitable control task.

In some embodiments, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other embodiments, at least some signal processing of the output of the sensing components can be performed in software such as processors 779. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 765 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the embodiments described herein can also be implemented in wearable interfaces with other types of sensors including, but not limited to, mechanomyography (MMG) sensors, sonomyography (SMG) sensors, and electrical impedance tomography (EIT) sensors.

In some embodiments, peripherals interface 761 includes a near-field communication (NFC) component 769, a global-position system (GPS) component 770, a long-term evolution (LTE) component 771, and/or a Wi-Fi and/or Bluetooth communication component 772. In some embodiments, peripherals interface 761 includes one or more buttons 773 (e.g., peripheral buttons 623 and 627 in FIG. 6), which, when selected by a user, cause operation to be performed at watch body 620. In some embodiments, the peripherals interface 761 includes one or more indicators, such as a light emitting diode (LED), to provide a user with visual indicators (e.g., message received, low battery, active microphone and/or camera, etc.).

Watch body 620 can include at least one display 605 for displaying visual representations of information or data to a user, including user-interface elements and/or three-dimensional virtual objects. The display can also include a touch screen for inputting user inputs, such as touch gestures, swipe gestures, and the like. Watch body 620 can include at least one speaker 774 and at least one microphone 775 for providing audio signals to the user and receiving audio input from the user. The user can provide user inputs through microphone 775 and can also receive audio output from speaker 774 as part of a haptic event provided by haptic controller 778. Watch body 620 can include at least one camera 725, including a front camera 725a and a rear camera 725b. Cameras 725 can include ultra-wide-angle cameras, wide angle cameras, fish-eye cameras, spherical cameras, telephoto cameras, depth-sensing cameras, or other types of cameras.

Watch body computing system 760 can include one or more haptic controllers 778 and associated componentry (e.g., haptic devices 776) for providing haptic events at watch body 620 (e.g., a vibrating sensation or audio output in response to an event at the watch body 620). Haptic controllers 778 can communicate with one or more haptic devices 776, such as electroacoustic devices, including a speaker of the one or more speakers 774 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 778 can provide haptic events to that are capable of being sensed by a user of watch body 620. In some embodiments, one or more haptic controllers 778 can receive input signals from an application of applications 782.

In some embodiments, wearable band computing system 730 and/or watch body computing system 760 can include memory 780, which can be controlled by one or more memory controllers of controllers 777. In some embodiments, software components stored in memory 780 include one or more applications 782 configured to perform operations at the watch body 620. In some embodiments, one or more applications 782 may include games, word processors, messaging applications, calling applications, web browsers, social media applications, media streaming applications, financial applications, calendars, clocks, etc. In some embodiments, software components stored in memory 780 include one or more communication interface modules 783 as defined above. In some embodiments, software components stored in memory 780 include one or more graphics modules 784 for rendering, encoding, and/or decoding audio and/or visual data and one or more data management modules 785 for collecting, organizing, and/or providing access to data 787 stored in memory 780. In some embodiments, one or more of applications 782 and/or one or more modules can work in conjunction with one another to perform various tasks at the watch body 620.

In some embodiments, software components stored in memory 780 can include one or more operating systems 781 (e.g., a Linux-based operating system, an Android operating system, etc.). Memory 780 can also include data 787. Data 787 can include profile data 788A, sensor data 789A, media content data 790, and application data 791.

It should be appreciated that watch body computing system 760 is an example of a computing system within watch body 620, and that watch body 620 can have more or fewer components than shown in watch body computing system 760, can combine two or more components, and/or can have a different configuration and/or arrangement of the components. The various components shown in watch body computing system 760 are implemented in hardware, software, firmware, or a combination thereof, including one or more signal processing and/or application-specific integrated circuits.

Turning to the wearable band computing system 730, one or more components that can be included in wearable band 610 are shown. Wearable band computing system 730 can include more or fewer components than shown in watch body computing system 760, can combine two or more components, and/or can have a different configuration and/or arrangement of some or all of the components. In some embodiments, all, or a substantial portion of the components of wearable band computing system 730 are included in a single integrated circuit. Alternatively, in some embodiments, components of wearable band computing system 730 are included in a plurality of integrated circuits that are communicatively coupled. As described above, in some embodiments, wearable band computing system 730 is configured to couple (e.g., via a wired or wireless connection) with watch body computing system 760, which allows the computing systems to share components, distribute tasks, and/or perform other operations described herein (individually or as a single device).

Wearable band computing system 730, similar to watch body computing system 760, can include one or more processors 749, one or more controllers 747 (including one or more haptics controllers 748), a peripherals interface 731 that can includes one or more sensors 713 and other peripheral devices, a power source (e.g., a power system 756), and memory (e.g., a memory 750) that includes an operating system (e.g., an operating system 751), data (e.g., data 754 including profile data 788B, sensor data 789B, etc.), and one or more modules (e.g., a communications interface module 752, a data management module 753, etc.).

One or more of sensors 713 can be analogous to sensors 721 of watch body computing system 760. For example, sensors 713 can include one or more coupling sensors 732, one or more SpO2 sensors 734, one or more EMG sensors 735, one or more capacitive sensors 736, one or more heart rate sensors 737, and one or more IMU sensors 738.

Peripherals interface 731 can also include other components analogous to those included in peripherals interface 761 of watch body computing system 760, including an NFC component 739, a GPS component 740, an LTE component 741, a Wi-Fi and/or Bluetooth communication component 742, and/or one or more haptic devices 746 as described above in reference to peripherals interface 761. In some embodiments, peripherals interface 731 includes one or more buttons 743, a display 733, a speaker 744, a microphone 745, and a camera 755. In some embodiments, peripherals interface 731 includes one or more indicators, such as an LED.

It should be appreciated that wearable band computing system 730 is an example of a computing system within wearable band 610, and that wearable band 610 can have more or fewer components than shown in wearable band computing system 730, combine two or more components, and/or have a different configuration and/or arrangement of the components. The various components shown in wearable band computing system 730 can be implemented in one or more of a combination of hardware, software, or firmware, including one or more signal processing and/or application-specific integrated circuits.

Wrist-wearable device 600 with respect to FIG. 6 is an example of wearable band 610 and watch body 620 coupled together, so wrist-wearable device 600 will be understood to include the components shown and described for wearable band computing system 730 and watch body computing system 760. In some embodiments, wrist-wearable device 600 has a split architecture (e.g., a split mechanical architecture, a split electrical architecture, etc.) between watch body 620 and wearable band 610. In other words, all of the components shown in wearable band computing system 730 and watch body computing system 760 can be housed or otherwise disposed in a combined wrist-wearable device 600 or within individual components of watch body 620, wearable band 610, and/or portions thereof (e.g., a coupling mechanism 616 of wearable band 610).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some embodiments, wrist-wearable device 600 can be used in conjunction with a head-wearable device (e.g., AR glasses 800 and VR system 910) and/or an HIPD, and wrist-wearable device 600 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 800 and VR headset 910.

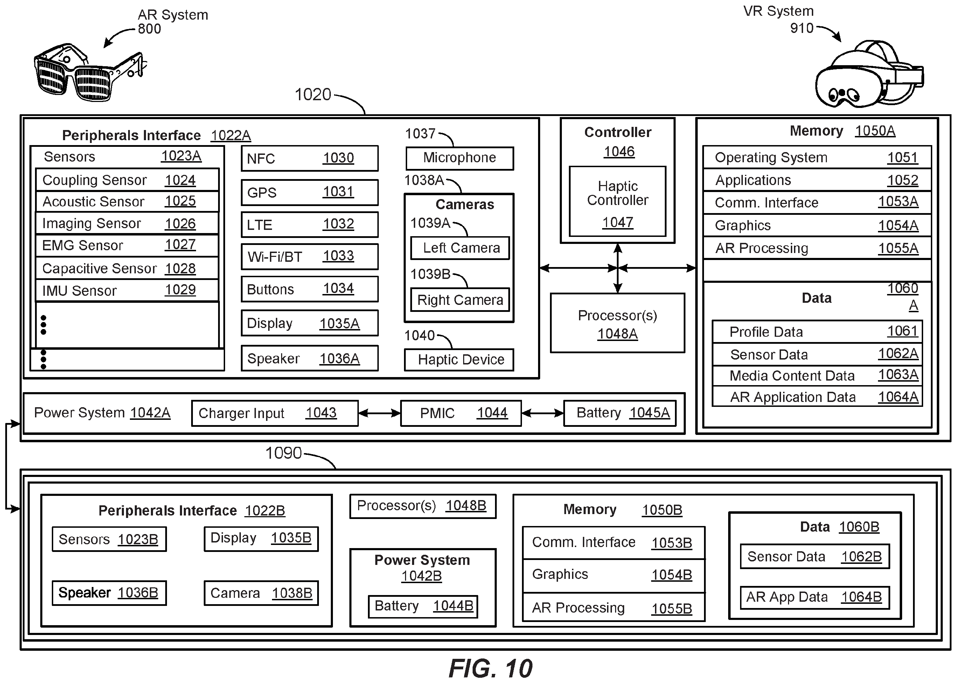

FIGS. 8 to 10 show example artificial-reality systems, which can be used as or in connection with wrist-wearable device 600. In some embodiments, AR system 800 includes an eyewear device 802, as shown in FIG. 8. In some embodiments, VR system 910 includes a head-mounted display (HMD) 912, as shown in FIGS. 9A and 9B. In some embodiments, AR system 800 and VR system 910 can include one or more analogous components (e.g., components for presenting interactive artificial-reality environments, such as processors, memory, and/or presentation devices, including one or more displays and/or one or more waveguides), some of which are described in more detail with respect to FIG. 10. As described herein, a head-wearable device can include components of eyewear device 802 and/or head-mounted display 912. Some embodiments of head-wearable devices do not include any displays, including any of the displays described with respect to AR system 800 and/or VR system 910. While the example artificial-reality systems are respectively described herein as AR system 800 and VR system 910, either or both of the example AR systems described herein can be configured to present fully-immersive virtual-reality scenes presented in substantially all of a user's field of view or subtler augmented-reality scenes that are presented within a portion, less than all, of the user's field of view.

FIG. 8 show an example visual depiction of AR system 800, including an eyewear device 802 (which may also be described herein as augmented-reality glasses, and/or smart glasses). AR system 800 can include additional electronic components that are not shown in FIG. 8, such as a wearable accessory device and/or an intermediary processing device, in electronic communication or otherwise configured to be used in conjunction with the eyewear device 802. In some embodiments, the wearable accessory device and/or the intermediary processing device may be configured to couple with eyewear device 802 via a coupling mechanism in electronic communication with a coupling sensor 1024 (FIG. 10), where coupling sensor 1024 can detect when an electronic device becomes physically or electronically coupled with eyewear device 802. In some embodiments, eyewear device 802 can be configured to couple to a housing 1090 (FIG. 10), which may include one or more additional coupling mechanisms configured to couple with additional accessory devices. The components shown in FIG. 8 can be implemented in hardware, software, firmware, or a combination thereof, including one or more signal-processing components and/or application-specific integrated circuits (ASICs).

Eyewear device 802 includes mechanical glasses components, including a frame 804 configured to hold one or more lenses (e.g., one or both lenses 806-1 and 806-2). One of ordinary skill in the art will appreciate that eyewear device 802 can include additional mechanical components, such as hinges configured to allow portions of frame 804 of eyewear device 802 to be folded and unfolded, a bridge configured to span the gap between lenses 806-1 and 806-2 and rest on the user's nose, nose pads configured to rest on the bridge of the nose and provide support for eyewear device 802, earpieces configured to rest on the user's ears and provide additional support for eyewear device 802, temple arms configured to extend from the hinges to the earpieces of eyewear device 802, and the like. One of ordinary skill in the art will further appreciate that some examples of AR system 800 can include none of the mechanical components described herein. For example, smart contact lenses configured to present artificial reality to users may not include any components of eyewear device 802.

Eyewear device 802 includes electronic components, many of which will be described in more detail below with respect to FIG. 10. Some example electronic components are illustrated in FIG. 8, including acoustic sensors 825-1, 825-2, 825-3, 825-4, 825-5, and 825-6, which can be distributed along a substantial portion of the frame 804 of eyewear device 802. Eyewear device 802 also includes a left camera 839A and a right camera 839B, which are located on different sides of the frame 804. Eyewear device 802 also includes a processor 848 (or any other suitable type or form of integrated circuit) that is embedded into a portion of the frame 804.

FIGS. 9A and 9B show a VR system 910 that includes a head-mounted display (HMD) 912 (e.g., also referred to herein as an artificial-reality headset, a head-wearable device, a VR headset, etc.), in accordance with some embodiments. As noted, some artificial-reality systems (e.g., AR system 800) may, instead of blending an artificial reality with actual reality, substantially replace one or more of a user's visual and/or other sensory perceptions of the real world with a virtual experience (e.g., AR systems 400 and 500).

HMD 912 includes a front body 914 and a frame 916 (e.g., a strap or band) shaped to fit around a user's head. In some embodiments, front body 914 and/or frame 916 include one or more electronic elements for facilitating presentation of and/or interactions with an AR and/or VR system (e.g., displays, IMUs, tracking emitter or detectors). In some embodiments, HMD 912 includes output audio transducers (e.g., an audio transducer 918), as shown in FIG. 9B. In some embodiments, one or more components, such as the output audio transducer(s) 918 and frame 916, can be configured to attach and detach (e.g., are detachably attachable) to HMD 912 (e.g., a portion or all of frame 916, and/or audio transducer 918), as shown in FIG. 9B. In some embodiments, coupling a detachable component to HMD 912 causes the detachable component to come into electronic communication with HMD 912.

FIGS. 9A and 9B also show that VR system 910 includes one or more cameras, such as left camera 939A and right camera 939B, which can be analogous to left and right cameras 839A and 839B on frame 804 of eyewear device 802. In some embodiments, VR system 910 includes one or more additional cameras (e.g., cameras 939C and 939D), which can be configured to augment image data obtained by left and right cameras 939A and 939B by providing more information. For example, camera 939C can be used to supply color information that is not discerned by cameras 939A and 939B. In some embodiments, one or more of cameras 939A to 939D can include an optional IR cut filter configured to remove IR light from being received at the respective camera sensors.

FIG. 10 illustrates a computing system 1020 and an optional housing 1090, each of which show components that can be included in AR system 800 and/or VR system 910. In some embodiments, more or fewer components can be included in optional housing 1090 depending on practical restraints of the respective AR system being described.

In some embodiments, computing system 1020 can include one or more peripherals interfaces 1022A and/or optional housing 1090 can include one or more peripherals interfaces 1022B. Each of computing system 1020 and optional housing 1090 can also include one or more power systems 1042A and 1042B, one or more controllers 1046 (including one or more haptic controllers 1047), one or more processors 1048A and 1048B (as defined above, including any of the examples provided), and memory 1050A and 1050B, which can all be in electronic communication with each other. For example, the one or more processors 1048A and 1048B can be configured to execute instructions stored in memory 1050A and 1050B, which can cause a controller of one or more of controllers 1046 to cause operations to be performed at one or more peripheral devices connected to peripherals interface 1022A and/or 1022B. In some embodiments, each operation described can be powered by electrical power provided by power system 1042A and/or 1042B.

In some embodiments, peripherals interface 1022A can include one or more devices configured to be part of computing system 1020, some of which have been defined above and/or described with respect to the wrist-wearable devices shown in FIGS. 6 and 7. For example, peripherals interface 1022A can include one or more sensors 1023A. Some example sensors 1023A include one or more coupling sensors 1024, one or more acoustic sensors 1025, one or more imaging sensors 1026, one or more EMG sensors 1027, one or more capacitive sensors 1028, one or more IMU sensors 1029, and/or any other types of sensors explained above or described with respect to any other embodiments discussed herein.

In some embodiments, peripherals interfaces 1022A and 1022B can include one or more additional peripheral devices, including one or more NFC devices 1030, one or more GPS devices 1031, one or more LTE devices 1032, one or more Wi-Fi and/or Bluetooth devices 1033, one or more buttons 1034 (e.g., including buttons that are slidable or otherwise adjustable), one or more displays 1035A and 1035B, one or more speakers 1036A and 1036B, one or more microphones 1037, one or more cameras 1038A and 1038B (e.g., including the left camera 1039A and/or a right camera 1039B), one or more haptic devices 1040, and/or any other types of peripheral devices defined above or described with respect to any other embodiments discussed herein.

AR systems can include a variety of types of visual feedback mechanisms (e.g., presentation devices). For example, display devices in AR system 800 and/or VR system 910 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some embodiments of AR systems also include optical subsystems having one or more lenses (e.g., conventional concave or convex lenses, Fresnel lenses, or adjustable liquid lenses) through which a user can view a display screen.

For example, respective displays 1035A and 1035B can be coupled to each of the lenses 806-1 and 806-2 of AR system 800. Displays 1035A and 1035B may be coupled to each of lenses 806-1 and 806-2, which can act together or independently to present an image or series of images to a user. In some embodiments, AR system 800 includes a single display 1035A or 1035B (e.g., a near-eye display) or more than two displays 1035A and 1035B. In some embodiments, a first set of one or more displays 1035A and 1035B can be used to present an augmented-reality environment, and a second set of one or more display devices 1035A and 1035B can be used to present a virtual-reality environment. In some embodiments, one or more waveguides are used in conjunction with presenting artificial-reality content to the user of AR system 800 (e.g., as a means of delivering light from one or more displays 1035A and 1035B to the user's eyes). In some embodiments, one or more waveguides are fully or partially integrated into the eyewear device 802. Additionally, or alternatively to display screens, some artificial-reality systems include one or more projection systems. For example, display devices in AR system 800 and/or VR system 910 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some embodiments, one or more waveguides are provided additionally or alternatively to the one or more display(s) 1035A and 1035B.

Computing system 1020 and/or optional housing 1090 of AR system 800 or VR system 910 can include some or all of the components of a power system 1042A and 1042B. Power systems 1042A and 1042B can include one or more charger inputs 1043, one or more PMICs 1044, and/or one or more batteries 1045A and 1044B.

Memory 1050A and 1050B may include instructions and data, some or all of which may be stored as non-transitory computer-readable storage media within the memories 1050A and 1050B. For example, memory 1050A and 1050B can include one or more operating systems 1051, one or more applications 1052, one or more communication interface applications 1053A and 1053B, one or more graphics applications 1054A and 1054B, one or more AR processing applications 1055A and 1055B, and/or any other types of data defined above or described with respect to any other embodiments discussed herein.

Memory 1050A and 1050B also include data 1060A and 1060B, which can be used in conjunction with one or more of the applications discussed above. Data 1060A and 1060B can include profile data 1061, sensor data 1062A and 1062B, media content data 1063A, AR application data 1064A and 1064B, and/or any other types of data defined above or described with respect to any other embodiments discussed herein.

In some embodiments, controller 1046 of eyewear device 802 may process information generated by sensors 1023A and/or 1023B on eyewear device 802 and/or another electronic device within AR system 800. For example, controller 1046 can process information from acoustic sensors 825-1 and 825-2. For each detected sound, controller 1046 can perform a direction of arrival (DOA) estimation to estimate a direction from which the detected sound arrived at eyewear device 802 of AR system 800. As one or more of acoustic sensors 1025 (e.g., the acoustic sensors 825-1, 825-2) detects sounds, controller 1046 can populate an audio data set with the information (e.g., represented in FIG. 10 as sensor data 1062A and 1062B).

In some embodiments, a physical electronic connector can convey information between eyewear device 802 and another electronic device and/or between one or more processors 848, 1048A, 1048B of AR system 800 or VR system 910 and controller 1046. The information can be in the form of optical data, electrical data, wireless data, or any other transmittable data form. Moving the processing of information generated by eyewear device 802 to an intermediary processing device can reduce weight and heat in the eyewear device, making it more comfortable and safer for a user. In some embodiments, an optional wearable accessory device (e.g., an electronic neckband) is coupled to eyewear device 802 via one or more connectors. The connectors can be wired or wireless connectors and can include electrical and/or non-electrical (e.g., structural) components. In some embodiments, eyewear device 802 and the wearable accessory device can operate independently without any wired or wireless connection between them.

In some situations, pairing external devices, such as an intermediary processing device (e.g., HIPD 206, 306, 406) with eyewear device 802 (e.g., as part of AR system 800) enables eyewear device 802 to achieve a similar form factor of a pair of glasses while still providing sufficient battery and computation power for expanded capabilities. Some, or all, of the battery power, computational resources, and/or additional features of AR system 800 can be provided by a paired device or shared between a paired device and eyewear device 802, thus reducing the weight, heat profile, and form factor of eyewear device 802 overall while allowing eyewear device 802 to retain its desired functionality. For example, the wearable accessory device can allow components that would otherwise be included on eyewear device 802 to be included in the wearable accessory device and/or intermediary processing device, thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on eyewear device 802 standing alone. Because weight carried in the wearable accessory device can be less invasive to a user than weight carried in the eyewear device 802, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 800 and/or VR system 910 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the user's real-world physical surroundings, including the locations of real-world objects within the real-world physical surroundings. In some embodiments, the methods described herein are used to map the real world, to provide a user with context about real-world surroundings, and/or to generate digital twins (e.g., interactable virtual objects), among a variety of other functions. For example, FIGS. 9A and 9B show VR system 910 having cameras 939A to 939D, which can be used to provide depth information for creating a voxel field and a two-dimensional mesh to provide object information to the user to avoid collisions.

In some embodiments, AR system 800 and/or VR system 910 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some embodiments of an artificial reality system, such as AR system 800 and/or VR system 910, ambient light (e.g., a live feed of the surrounding environment that a user would normally see) can be passed through a display element of a respective head-wearable device presenting aspects of the AR system. In some embodiments, ambient light can be passed through a portion less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

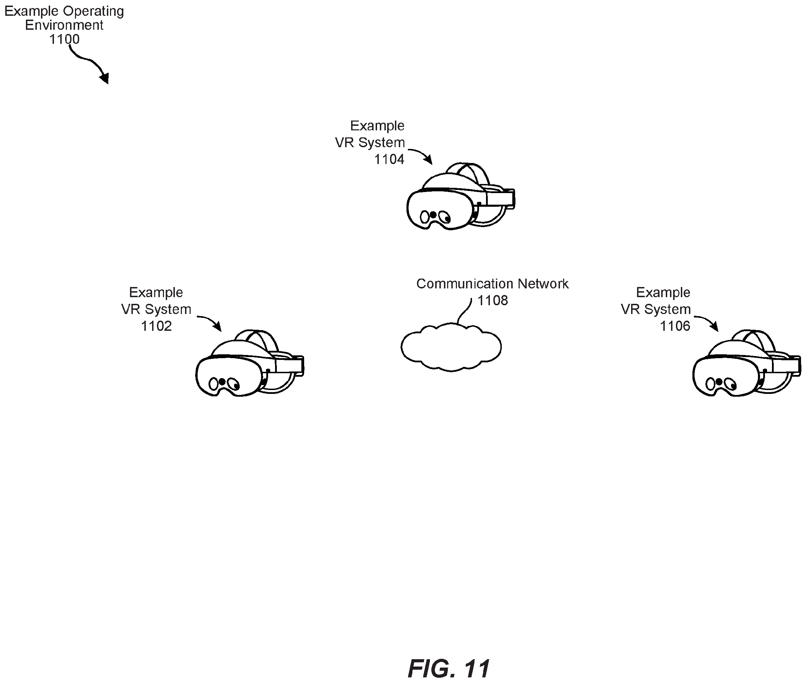

FIG. 11 illustrates example operating environment 1100 in which at least some of the shared processing techniques of the present disclosure are implemented. In aspects, example operating environment 1100 can include wearable devices communicatively coupled to each other such that these devices can share, approximately in real time (e.g., within seconds or fractions of a second), sensor data, output data as a result of performing various processing operations (individually or in conjunction), and data received from at least one device that is external to each wearable device.

Specifically, FIG. 11 illustrates example operating environment 1100 in which a plurality of wearable devices (e.g., example VR system 1102, example VR system 1104, and example VR system 1106) can be positioned as part of a common acoustic environment and may be communicatively coupled to support a number of different shared processing operations. In some aspects, the wearable devices can be located within a particular distance from each other within example operating environment 1100, and operate to capture overlapping portions of audio signals generated as a result of, e.g., conversations held between multiple users wearing these devices. In aspects, example operating environment 1100 can enable these devices to cooperatively process audio associated with an example operating environment 1100 such as, e.g., a meeting, a classroom session, a guided tour, a travel interaction, a restaurant, and so forth, or another multi-user scenario in which multiple users hear or participate in a common acoustic scene. In some aspects, the operating environment 1100 can support sharing of sensor data, including microphone data and, where available, camera data and motion data, as well as sharing of output data generated based on such sensor data, such that one or more of the wearable devices can perform an audio-processing task for the benefit of the group. It is noted that example operating environment 1100 can include a wide variety of conditions and include a larger number of users, each of whom may wear a different wearable device.

Notably, the techniques described in the present disclosure can be implemented by the shared processing system described herein if at least one wearable device is communicatively coupled to at least another wearable device through communication network 1108. Alternatively, the processing techniques described herein may also be implemented if at least one wearable device is communicatively coupled to a device that is external to example operating environment 1100. In some aspects, the shared processing system can correspond to a software-based processing framework executed by one or more wearable devices and, in some aspects, an external device. The software-based processing framework can coordinate exchange of sensor data and output data among communicatively coupled devices and can cause a selected device to perform processing using data from multiple external devices with which the selected device is coupled.

In aspects, each wearable device can include sensors that capture local sensor inputs, share data with other wearable devices, and output signals on which one or more processing operations may be implemented (e.g., processed audio signals, processed video signals, processed sensor data, and so forth) to the users donning these devices, to devices that are external to these wearable devices, and so forth. In some aspects, a wearable device (e.g., example VR system 1102) can be selected to (1) receive sensor data from one or more of the other wearable devices and (2) perform processing using aggregated multi-device inputs, for example, to generate enhanced speech, translated speech, conversation-focus audio, or audio associated with source tracking. Although example VR systems 1102, 1104, and 1106, respectively, are illustrated in FIG. 11, the wearable devices can instead or additionally include smart glasses or other audio-enabled wearable devices capable of implementing at least one of the shared processing techniques described herein. In some aspects, responsibility for performing a given audio-processing task can remain with one selected wearable device for a period of time or can be handed off among the wearable devices in order to distribute processing burden, power consumption, or both.

Communication network 1108 can communicatively couple example VR systems 1102, 1104, and 1106, respectively, to permit approximately real-time exchange of information among the devices. In some aspects, the communication network 1108 can support transmission of raw or partially processed sensor data from one wearable device to another wearable device, transmission of processed audio generated by a selected wearable device to one or more additional wearable devices for playback, or both. The communication network 1108 can further support communication between the wearable devices and at least one external device, such that the wearable devices can receive additional data and/or provide data for further processing outside the wearable devices. By supporting this exchange of information, the communication network 1108 can enable these devices to operate cooperatively rather than independently, thereby reducing duplicative processing across the devices while allowing multiple users to benefit from a shared audio-processing result. It is noted, however, that each wearable device (e.g., any of example VR system 1102, example VR system 1104, or example VR system 1106) can perform any and/or all of the techniques described herein as implemented by the shared processing system of the present disclosure.

In some aspects, the wearable devices (e.g., example VR systems 1102, 1104, and 1106) can be communicatively coupled to an external device, such as a server, that is configured to exchange data with one or more of the wearable devices and to support at least a portion of the shared processing described herein. The external device can receive sensor data, audio data, metadata, control information, or other information from one or more of the wearable devices and can provide data, instructions, processing results, or other information back to the wearable devices for use in connection with audio enhancement, conversation focus, translation, source tracking, or other audio-processing operations. In some aspects, the external device can supplement operation of the wearable devices by providing additional computing resources, coordinating data exchange, or storing information associated with one or more shared processing sessions, while the wearable devices continue to capture local inputs and provide audio output to their respective users.

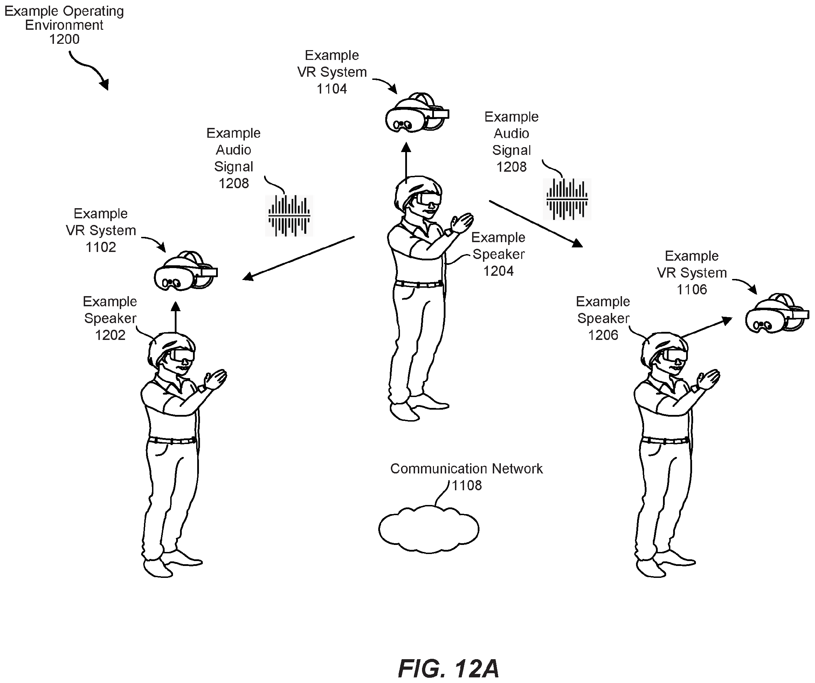

FIG. 12A illustrates the shared processing system implementing various shared processing techniques as part of another operating environment (example operating environment 1200). In example operating environment 1200, example speaker 1202, example speaker 1204, and example speaker 1206 may be involved in or may participate in a shared or common acoustic environment. In aspects, this common acoustic environment (example operating environment 1200) can include a physical setting in which multiple users are exposed to substantially similar audio signals generated by one or more speakers, conversations, or background sources can be captured by multiple nearby wearable devices. For example, the common acoustic environment can correspond to a physical setting as part of an external environment in which wearable devices donned by various users (e.g., example VR system 1102, example VR system 1104, and example VR system 1106) are located within a predefined distance of one another to detect overlapping portions of the same speech and ambient sound. In aspects, this predefined distance can correspond to a few feet, 10 feet, 20 feet, 30 feet, and so forth. Other predefined distance values are also contemplated.

For example, example operating environment 1200 illustrated in FIG. 12A can correspond to a meeting (in a cafeteria of an office building) in which example speaker 1202, example speaker 1204, and example speaker 1206 may be seated together at, e.g., a large dining table. As part of this meeting, the speakers may be accessing or viewing a presentation as part of an augmented or virtual reality environment accessible via wearable devices donned by these speakers. As illustrated, example speaker 1202 may be wearing example VR system 1102, while example speakers 1204 and 1206 may be wearing example VR systems 1104 and 1106, respectively. At some point in time during their interaction, example speaker 1204 may make a comment about one or more features of the presentation, which may result in example audio signal 1208 being captured by an audio sensor of example VR system 1102 (donned by example speaker 1202) and another audio sensor of example VR system 1106 (donned by example speaker 1206).

Specifically, at least one audio sensor of example VR system 1102 can capture a first instance of example audio signal 1208, while at least an additional sensor of example VR system 1106 can capture a second instance of the example audio signal 1208. As each audio sensor is positioned in a different location, each of example VR system 1102 and example VR system 1106 can detect the same underlying speech from a different respective spatial perspective. As such, the detected instances of the example audio signal 1208 can differ from one another with respect to arrival timing, relative amplitude, background-noise content, or other characteristics.

In aspects, the first instance of example audio signal 1208 may represent or correspond to a clearer representation of the comment made by example speaker 1204 as compared to the second instance because a lot of ambient noise may distort the second instance captured by the sensor of VR system 1106. For example, example speaker 1206 may be seated at the table at a location (e.g., near the cafeteria's kitchen) where there is significantly more ambient noise relative to the location at the table at which example speaker 1202 is seated. Consequently, example speaker 1202 better understands the meaning of the comment made by example speaker 1204 as compared to example speaker 1206, which results in frustration and poor user experience for example speaker 1206. To address and at least partly resolve this issue, the shared processing system of the present disclosure may implement a technique whereby example VR system 1102 may (1) communicate the clearer version (first instance of example audio signal 1208) to example VR system 1106 via communication network 1108, e.g., to be output via speaker components of example VR system 1106 or (2) generate an enhanced version of the first instance of example audio signal 1208 for transmission. Communicating the clearer version may somewhat mitigate the poor user experience, but generating and transmitting an enhanced audio signal may ensure that all speakers at the table are able to receive the same or a substantially similar version of example audio signal 1208.

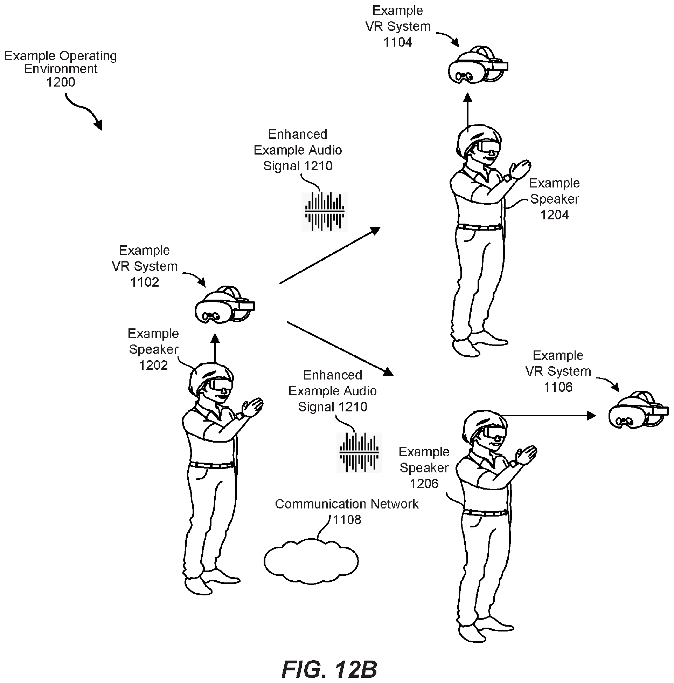

FIG. 12B illustrates the shared processing system of the present disclosure generating an enhanced audio signal from two instances of an audio signal detected by two different wearable devices. Continuing with the example discussed above with respect to FIG. 12A, upon receiving the first instance of example audio signal 1210, example VR system 1102 - designated or identified by the shared processing system as the processing device or implementation device - may implement or execute, using the shared processing system of the present disclosure, multiple processing operations to generate enhanced audio signal 1210.

In some aspects, these processing operations can include speech enhancement, noise reduction, suppression of background or ambient sounds, speaker separation, conversation-focus processing, or source-tracking-based selection of a target speaker, e.g., example speaker 1204 in this instance. In aspects, example VR system 1102 can implement speech-enhancement processing using one or more signal-processing and/or machine-learning techniques that are applied to the first instance of example audio signal 1208 and, where available, additional audio data received from one or more other wearable devices, e.g., the second instance of example audio signal 1208. In aspects, in order to accurately and effectively generate enhanced example audio signal 1210 from example audio signal 1208, the designated processing device (e.g., example VR system 1102) may detect the first instance of example audio signal 1208, receive the second instance of example audio signal 1208 (from example VR system 1106), and analyze and process both of these signal instances.

In aspects, example VR system 1102 can perform technological processing operations on the first and second instances of example audio signal 1208 in order to distinguish target speech (e.g., comment made by example speaker 1204) from cafeteria noise, adjacent conversations, dish or utensil noise, HVAC noise, and other interfering sounds present in example operating environment 1200. For example, example VR system 1102 can temporally align the respective signal instances, compare relative arrival timing and signal level characteristics across the devices, and combine the signals using beamforming, spectral filtering, adaptive noise cancellation, dereverberation, voice-activity detection, source-separation processing, or one or more other speech-enhancement techniques. In some aspects, example VR system 1102 can further use camera data, motion data, head-orientation data, or other sensor data received from example VR system 1104, example VR system 1106, or both, to identify example speaker 1204 as an active speaker, estimate a direction associated with the speech, or support conversation-focus selection during generation of enhanced example audio signal 1210.

In some aspects, because example VR system 1102 receives audio-related information from multiple wearable devices located around the cafeteria table, example VR system 1102 can generate enhanced example audio signal 1210 using a broader set of spatial and sensor information than would be available from any one device alone. This shared-processing arrangement can allow the system to perform speech enhancement once for a group of devices, e.g., example VR system 1102, example VR system 1104, and example VR system 1106, rather than require each of example VR system 1102, example VR system 1104, and example VR system 1106 to execute duplicative enhancement processing on overlapping recordings of the same or substantially similar example audio signal 1208. As a result, enhanced example audio signal 1210 can correspond to a shared output stream that preserves speech associated with example speaker 1204 while reducing non-target sounds captured from, e.g., the surrounding cafeteria environment.

In some aspects, after generating enhanced example audio signal 1210, example VR system 1102 can transmit enhanced example audio signal 1210 through communication network 1108 to example VR system 1104 and example VR system 1106 for playback by these devices. In this manner, one wearable device - example VR system 1102 in this instance - can serve as the implementation device or designated device for a group of nearby wearable devices that share the same acoustic scene, thereby reducing duplicative compute operations and associated power consumption across the group. In some aspects, the role of the implementation device can remain with example VR system 1102 for a selected interval or can later be transferred to another wearable device so that processing burden and battery usage are distributed across the wearable devices over time.

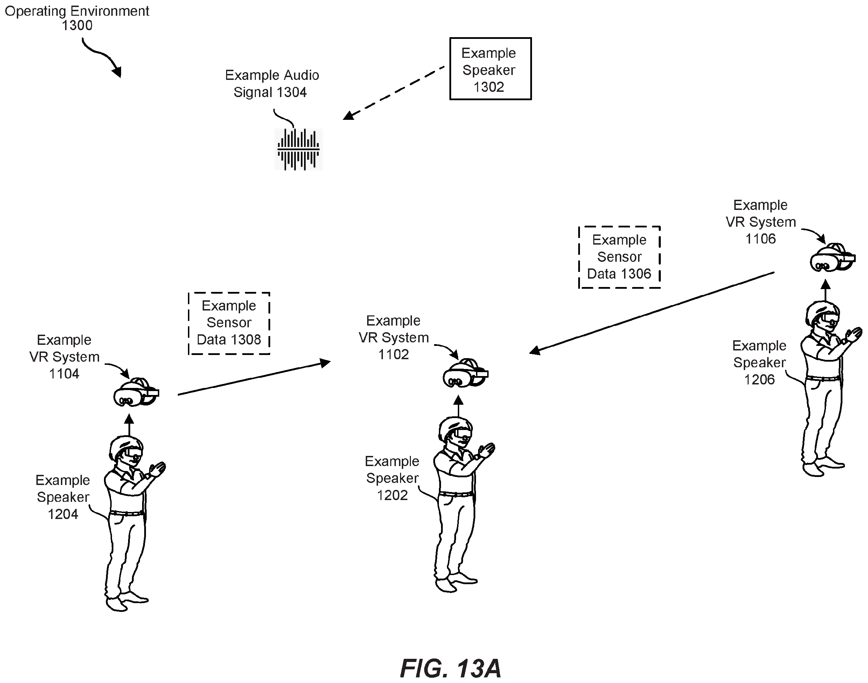

FIG. 13A illustrates another operating environment in which the shared processing techniques described in the present disclosure are implemented, according to some aspects described and illustrated herein. Specifically, an operating environment 1300 can correspond to a networking event in an office environment in which example speaker 1302 may be giving a speech or presenting while moving from one location to another on a stage while three other speakers, e.g., example speaker 1202, example speaker 1204, and example speaker 1206, may be a part of the audience.

In aspects, a number of additional conversations may be occurring while example speaker 1302 may be giving his speech. As such, ambient noise and interference in the form of these additional conversations may make it challenging to clearly hear example speaker 1302. Further, depending on the location of example speaker 1302 (e.g., target speaker) on the stage, example speaker 1204, example speaker 1202, or example speaker 1206 may be in a suitable position to detect a more accurate or clearer version of the audio signal or audio signals corresponding to the statements made by example speaker 1302.

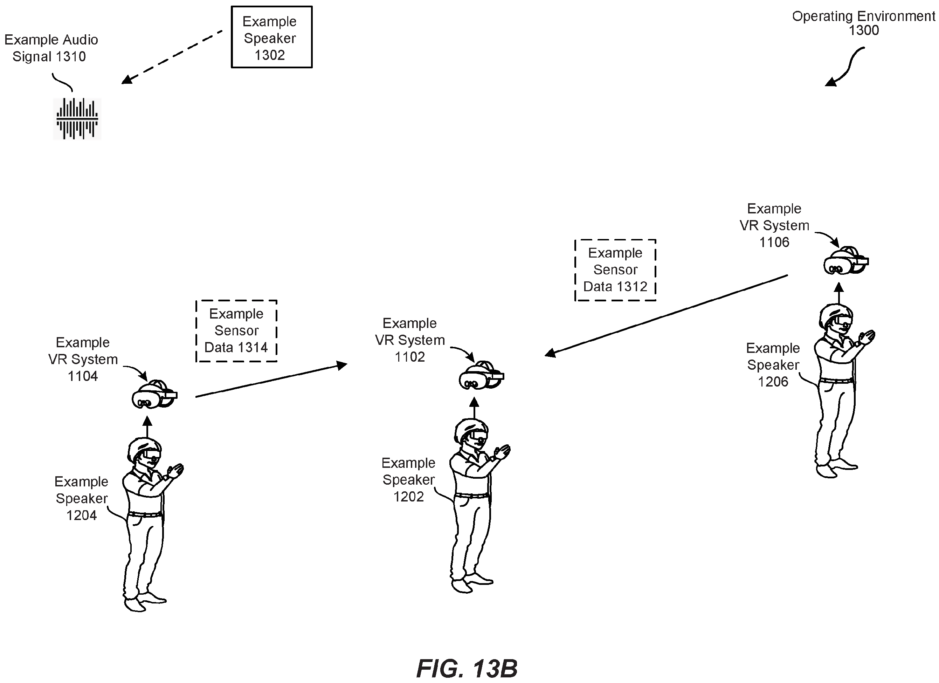

FIG. 13B illustrates the shared processing system implementing the shared processing techniques described herein on an individual that is moving from one location to another. Specifically, as example speaker 1302 changes location within operating environment 1300, the wearable device providing the most useful audio information and the wearable device providing the most useful visual information need not remain the same as in FIG. 13A. In the example illustrated in FIG. 13B, speech of example speaker 1302 can generate example audio signal 1310, which may be detected by example VR systems 1102, 1104, and 1106. Further, in aspects, example VR system 1102 can receive example sensor data 1314 from example VR system 1104 and example sensor data 1312 from example VR system 1106. Example sensor data 1314 can correspond to microphone signals captured by example VR system 1104, and example sensor data 1312 can correspond to image data or a live video stream captured by example VR system 1106. In aspects, the shared processing system can dynamically redistribute sensing and processing contributions among multiple co-located wearable devices in a common acoustic scene, rather than requiring each wearable device to independently process duplicative versions of the same speech event.

In some aspects, example sensor data 1314 can indicate that example VR system 1104 is positioned to capture a comparatively strong or otherwise useful representation of example audio signal 1310 at a given time. Example VR system 1102 can receive the microphone-derived sensor data 1314 and can evaluate that data together with locally available audio to compare relative arrival timing, signal level, spectral content, reverberation, and background-noise characteristics associated with speech of example speaker 1302. Based on this comparison, example VR system 1102 can select, weight, align, or combine the available audio signals to emphasize target speech (example audio signal 1304) and suppress competing conversations and other event noise. In this manner, one wearable device - example VR system 1102 - can perform speech enhancement, speaker separation, conversation-focus processing, or source-selection processing on behalf of the nearby wearable devices, while another wearable device contributes supporting microphone data, thereby avoiding duplication of a full audio-processing workflow at each device.

In some aspects, example VR system 1102 may also receive example sensor data 1312 from example VR system 1106, which can provide visual information useful for maintaining identification of example speaker 1302 as the target speaker. For example, the image data or live video stream can display head movement, head pose, facial orientation, mouth movement, body orientation, or another visual characteristic associated with example speaker 1302. Example VR system 1102 can use this image-based information to determine whether and from where example speaker 1302 is currently speaking, to estimate a direction or location associated with the speech, and to distinguish speech of example speaker 1302 from other sounds or speakers present in operating environment 1300. Where available, example VR system 1102 can further use IMU data, head-orientation data, line-of-sight information, or other motion-related data from one or more wearable devices to refine source tracking and active-speaker identification.

In some aspects, by fusing example sensor data 1314 (audio data) with the example sensor data 1312 (image data and/or live video stream data), example VR system 1102 can generate an updated shared audio output corresponding to speech of example speaker 1302. For example, example VR system 1102 can correlate audio-arrival patterns captured at example VR system 1104 with head-movement or face-tracking information captured at example VR system 1106 to determine when example speaker 1302 is actively speaking and which portions of the received audio should be selected for enhancement. The resulting processed output can correspond to enhanced speech in which target speech is emphasized and irrelevant sounds are reduced, and can therefore provide conversation-focus audio or hearing-enhancement audio for one or more users attending the networking event. Because the processed output can be generated from shared multi-device inputs rather than from one device alone, the shared audio stream can be cleaner and more intelligible for the group.

In some aspects, after generating the processed output, example VR system 1102 can transmit the resulting audio stream to example VR system 1104, example VR system 1106, or both for playback, such that one device performs the compute operation and multiple devices benefit from the result. This shared-output arrangement can reduce total processing burden, battery consumption, and thermal load across the wearable devices by avoiding repeated execution of the same enhancement or source-tracking operations at each device. In some aspects, compute-intensive functions can be assigned to one wearable device at a time while the remaining devices operate in a lower-power mode, contribute selected sensor inputs, or primarily provide playback.

In some aspects, example VR system 1102 can remain the designated processing device for a selected interval, or the shared processing system can later hand off processing responsibility to example VR system 1104 or example VR system 1106 based on signal quality, visual quality, battery level, communication quality, processing availability, or another selection criterion. Accordingly, the wearable devices can cooperatively and, in some aspects, temporarily execute speech-enhancement, source-tracking, and target-speaker-identification functions while redistributing resulting audio among the group. As such, these techniques represent a shared and adaptive processing framework in which multiple nearby wearable devices jointly support high-quality speech capture and playback for a moving target speaker in a noisy networking-event environment.

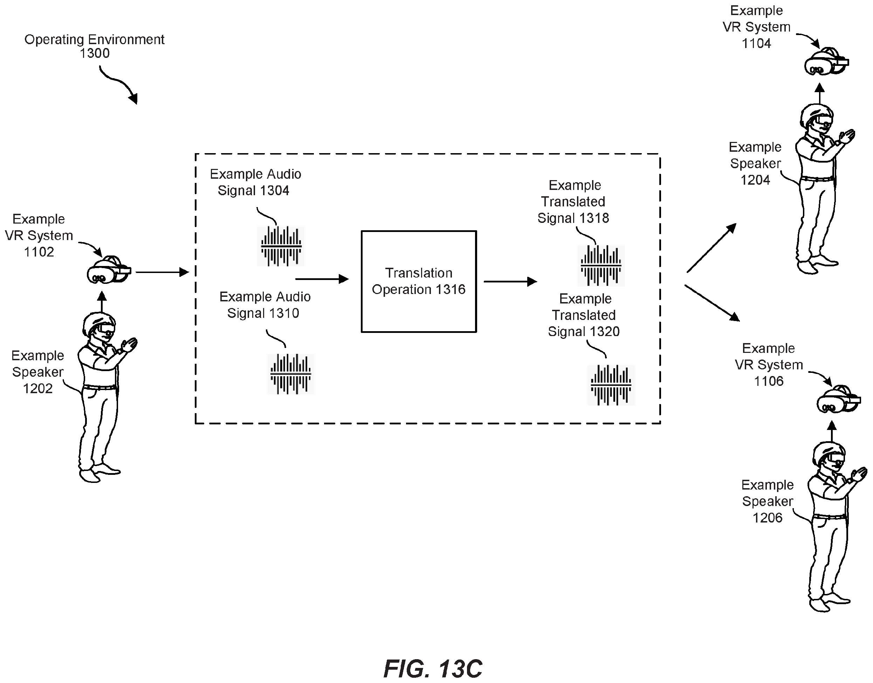

FIG. 13C illustrates the shared processing system performing a translation operation on multiple audio signals, according to aspects described and illustrated herein. Specifically, example VR system 1102 can operate as a designated processing device for a group of nearby wearable devices that share a common audio environment and can receive audio information corresponding to example audio signal 1304, example audio signal 1310, or both, from one or more spatially distributed capture points within the audience. Rather than requiring each of example VR system 1102, example VR system 1104, and example VR system 1106 to separately execute a translation pipeline on overlapping versions of the same speech, example VR system 1102 can perform the translation operation 1316 once for the group using shared multi-device inputs.

In some aspects, the translation operation 1316 can be performed approximately in real time on the selected speech content associated with example speaker 1302 so as to generate translated audio output while the presentation is ongoing. For example, example VR system 1102 can process example audio signal 1304 and example audio signal 1310 as respective instances of speech associated with example speaker 1302 and can generate example translated signal 1318 and example translated signal 1320 corresponding to a language different from that of the original speech. In some aspects, example VR system 1102 can first use the shared-processing techniques described above to identify portions of the received audio that correspond to the target speaker, suppress competing conversations and other event noise, and then apply the translation operation 1316 to the selected speech content. This arrangement can support live language translation in a multi-user presentation setting in which multiple audience members are hearing similar audio signals, namely the speech given during a networking event by example speaker 1302 as described above with respect to FIGS. 13A and 13B.

In some aspects, example VR system 1102 can use shared sensor inputs from other wearable devices to improve the reliability and timing of the translation operation 1316. For example, microphone data captured by one wearable device can provide an acoustically favorable representation of speech associated with example speaker 1302, while image data, video data, head-movement information, or other sensor data captured by another wearable device can help confirm when example speaker 1302 is actively speaking and which speech segments should be processed for translation. By correlating audio-arrival information, signal characteristics, and visual speaker-related information across multiple wearable devices, example VR system 1102 can more accurately associate detected speech with example speaker 1302 and can reduce translation of non-target speech from nearby conversations. In this manner, FIG. 13C can illustrate multi-wearable sensor fusion supporting source tracking, active-speaker identification, and selection of target speech for downstream translation processing.

In some aspects, once the translation operation 1316 is performed, example VR system 1102 can generate example translated signal 1318 for transmission to example VR system 1104 and example translated signal 1320 for transmission to example VR system 1106, such that the translated outputs are rendered as sound in a language different from the language of example audio signal 1304 and example audio signal 1310. In some aspects, example translated signal 1318 and example translated signal 1320 can correspond to the same translated linguistic content and can be separately formatted, buffered, timed, or encoded for delivery to the respective wearable devices. Thus, one wearable device - example VR system 1102 - can perform the compute-intensive translation processing and multiple wearable devices can receive the resulting translated audio for playback, allowing several users at the networking event to benefit from a shared translation result derived from common speech inputs.

In some aspects, by centralizing the translation operation 1316 at example VR system 1102, the shared processing system can reduce duplicative processing burden, battery consumption, and thermal load across the group of wearable devices. Instead of each nearby wearable device independently running a translation model, speech-selection logic, and associated output-generation operations on an audio signal, one selected wearable device can execute those operations while the remaining wearable devices contribute supporting sensor inputs and/or output the translated results. In some aspects, the wearable device selected to perform the translation operation 1316 can be chosen based on available battery capacity, processing availability, communication quality, signal quality, or another operating condition, such that the group conserves power while maintaining approximately real-time translated output during the presentation.

In some aspects, the wearable device responsible for the translation operation 1316 need not remain fixed throughout the entirety of the networking event. For example, example VR system 1102 can perform the translation operation 1316 during a first interval, after which responsibility for generating translated output can be handed off to example VR system 1104 or example VR system 1106 during a later interval based on updated device conditions or changing quality of available inputs.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method comprising:
detecting, by an audio sensor communicatively coupled to the computer of a first device, a first instance of an audio signal from an environment external to the first device, the first device being communicatively coupled to a second device that receives a second instance of the audio signal;
receiving, by the first device, a second instance of the audio signal from the second device that is communicatively coupled to the first device;
generating by the first device, using the first instance of the audio signal and the second instance of the audio signal, a modified audio signal; and
transmitting the modified audio signal to the second device for output.

2. The computer-implemented method of claim 1, wherein each of the first device and the second device is a wearable device.

3. The computer-implemented method of claim 1 or claim 2, wherein the generating of the modified audio signal comprises comparing a first arrival time of the first instance of the audio signal and a second arrival time of the second instance of the audio signal; and preferably
wherein the generating of the modified audio signal further comprises comparing first signal level characteristics of the first instance of the audio signal to second signal level characteristics of the second instance of the audio signal.

4. The computer-implemented method of any preceding claim, wherein the generating of the modified audio signal further comprises temporally aligning the first instance of the audio signal with the second instance of the audio signal; and preferably
wherein the generating of the modified audio signal further comprises combining the first instance of the audio signal and the second instance of the audio signal using at least one of beamforming, spectral filtering, adaptive noise cancellation, dereverberation, voice-activity detection, or source-separation processing.

5. The computer-implemented method of any preceding claim, further comprising implementing a translation operation on the modified audio signal.

6. The computer-implemented method of any preceding claim, wherein the modified audio signal comprises an enhanced version of the audio signal.

7. A system comprising:
a first device communicatively coupled to at least a second device, wherein the first device includes:
an audio sensor that detects a first instance of an audio signal from an environment external to the first device;
at least one physical processor; and
physical memory comprising computer-executable instructions that, when executed by the physical processor, cause the physical processor to:
receive a second instance of the audio signal from the second device;
generate, using the first instance of the audio signal and the second instance of the audio signal, a modified audio signal; and
transmit the modified audio signal to the second device for output.

8. The system of claim 7, wherein each of the first device and the second device is a wearable device.

9. The system of claim 7 and claim 8, wherein the physical processor generating the modified audio signal upon execution of the computer-executable instructions comprises comparing a first arrival time of the first instance of the audio signal and a second arrival time of the second instance of the audio signal; and preferably
wherein the physical processor generating the modified audio signal upon execution of the computer-executable instructions comprises comparing first signal level characteristics of the first instance of the audio signal to second signal level characteristics of the second instance of the audio signal.

10. The system of any one of claims 7 to 9, wherein the physical processor generating the modified audio signal upon execution of the computer-executable instructions comprises temporally aligning the first instance of the audio signal with the second instance of the audio signal; and preferably
wherein the physical processor generating the modified audio signal upon execution of the computer-executable instructions comprises combining the first instance of the audio signal and the second instance of the audio signal using at least one of beamforming, spectral filtering, adaptive noise cancellation, dereverberation, voice-activity detection, or source-separation processing.

11. The system of any one of claims 7 to 10, wherein computer-executable instructions, when executed by the physical processor, further cause the physical processor to implement a translation operation on the modified audio signal.

12. The system of any one of claims 7 to 11, wherein the modified audio signal comprises an enhanced version of the audio signal.

13. A computer-readable medium comprising one or more computer-executable instructions that, when executed by at least one processor of a first device, cause the at least one processor to:
receive, using an audio sensor that is communicatively coupled to the at least one processor, a first instance of an audio signal from an environment external to the first device;
receive a second instance of the audio signal from the second device;
generate, using the first instance of the audio signal and the second instance of the audio signal, a modified audio signal; and
transmit the modified audio signal to the second device for output.

14. The computer-readable medium of claim 13, wherein each of the first device and the second device is a wearable device.

15. The computer-readable medium of claim 13 or claim 14, wherein the at least one processor generating the modified audio signal upon execution of the one or more computer-executable instructions comprises comparing a first arrival time of the first instance of the audio signal and a second arrival time of the second instance of the audio signal; and preferably
wherein the at least one processor generating the modified audio signal upon execution of the one or more computer-executable instructions comprises comparing first signal level characteristics of the first instance of the audio signal to second signal level characteristics of the second instance of the audio signal.
